(19) **Europäisches Patentamt**
**European Patent Office**
**Office européen des brevets**

(11) **EP 3 753 670 B1**

(12) **EUROPEAN PATENT SPECIFICATION**

(45) Date of publication and mention
of the grant of the patent:
**04.05.2022 Bulletin 2022/18**

(21) Application number: **18912463.9**

(22) Date of filing: **28.03.2018**

(51) International Patent Classification (IPC):
**B23K 35/40** (2006.01)          **B23K 35/368** (2006.01)
**C22C 38/00** (2006.01)          **C22C 38/04** (2006.01)
**B23K 35/02** (2006.01)          **B23K 35/30** (2006.01)
**C22C 38/02** (2006.01)          **C22C 38/06** (2006.01)
**C22C 38/08** (2006.01)          **C22C 38/12** (2006.01)
**C22C 38/14** (2006.01)          **C22C 38/16** (2006.01)
**C22C 38/60** (2006.01)

(52) Cooperative Patent Classification (CPC):
**B23K 35/0266; B23K 35/3026; B23K 35/3053;**
**B23K 35/3073; B23K 35/368; B23K 35/406;**
**C22C 38/001; C22C 38/002; C22C 38/005;**
**C22C 38/008; C22C 38/02; C22C 38/04;**
**C22C 38/06; C22C 38/08; C22C 38/12;**          (Cont.)

(86) International application number:
**PCT/JP2018/012872**

(87) International publication number:
**WO 2019/186797 (03.10.2019 Gazette 2019/40)**

(54) **METHOD FOR MANUFACTURING FLUX-CORED WIRE, FLUX-CORED WIRE AND METHOD FOR MANUFACTURING WELDED JOINT**

VERFAHREN ZUR HERSTELLUNG EINES FLUSSMITTELKERNDRAHTS, FLUSSMITTELKERNDRAHT UND VERFAHREN ZUR HERSTELLUNG EINER SCHWEISSVERBINDUNG

PROCÉDÉ DE FABRICATION DE FIL FOURRÉ, FIL FOURRÉ ET PROCÉDÉ DE FABRICATION D'UN JOINT SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2020 Bulletin 2020/52**

(73) Proprietor: **NIPPON STEEL CORPORATION**
**Chiyoda-ku**
**Tokyo 100-8071 (JP)**

(72) Inventors:
• **HASHIBA Yuji**
**Tokyo 100-8071 (JP)**
• **SAKABAYASHI Naoki**
**Tokyo 135-0016 (JP)**
• **TAKAYAMA Rikiya**
**Tokyo 135-0016 (JP)**
• **SASAKI Kiyohito**
**Tokyo 135-0016 (JP)**

(74) Representative: **Vossius & Partner**
**Patentanwälte Rechtsanwälte mbB**
**Siebertstrasse 3**
**81675 München (DE)**

(56) References cited:
**JP-A- S58 199 693          JP-A- 2011 020 154**
**JP-A- 2013 226 578          JP-A- 2013 226 578**
**JP-A- 2017 042 787          JP-A- 2017 042 787**
**JP-A- 2018 043 288          JP-A- 2018 047 486**

(52) Cooperative Patent Classification (CPC): (Cont.)
**C22C 38/14; C22C 38/16; C22C 38/42;
C22C 38/58; C22C 38/60**

**Description**

[Technical Field of the Invention]

The present invention relates to a method of manufacturing a flux-cored wire, a flux-cored wire, and a method of manufacturing a welded joint.

[Related Art]

Anti-weathering steel which is exposed to atmospheric corrosion environments by being used for a long period of time generally has a protective rust layer formed on a surface thereof. The rust layer shields the corrosion-resistant steel from corrosive substances from the outside to inhibit the corrosion of the anti-weathering steel after the formation of the rust layer, and thus the weather resistance of the steel is exhibited. For this reason, anti-weathering steel is used for structures such as bridges as steel which can be used as a bare material without coating.

However, in a high floating salinity environment such as a seaside area or an area where a snow melting agent is sprayed, it is difficult to form a protective rust layer on a surface of anti-weathering steel, and the corrosion inhibition effect is hardly exhibited. Therefore, in these areas, it is impossible to use anti-weathering steel as it is as a bare material, and it is necessary to perform coating thereon.

Furthermore, in the above-described high floating salinity environment, coating film damages are generated by deterioration in the coating film, and the steel immediately under the coating film damage portion is directly exposed to the corrosion environment. Accordingly, the coated steel corrodes such that the coating film swells like a hump around the damage portion. With the progress of such corrosion, the coating film damage portion is further expanded and the structure thus continuously corrodes. Accordingly, in a high floating salinity environment, the coated steel is recoated about every ten years in many cases in order to prolong the life of the structure. Since such a repair process involves a large number of steps, several technical proposals have been made on corrosion-resistant steel allowing a reduction in the maintenance cost with a prolonged coating life and a substantially extended repair coating interval.

For example, Patent Document 1 discloses steel for bridges which has excellent weather resistance and coating delamination resistance and can be used as a minimum maintenance material even in a high floating salinity environment such as a seaside area or an area where snow-melting salt is sprayed.

Patent Document 2 discloses corrosion-resistant steel for the hold of a coal/ore carrying vessel, which can prolong the life of a coating film and inhibit the corrosion after delamination even in a corrosion environment in which the coating film is easily damaged mechanically and easily affected by both $SO_4^{2-}$ and $Cl^-$.

Furthermore, in addition to the corrosion resistance of steel itself, it is also required to impart excellent weather resistance and coating corrosion resistance to a weld metal in a case where anti-weathering steel or corrosion-resistant steel is welded as disclosed in the above-described Patent Documents 1 and 2.

Particularly, the excess weld metal has a problem in weather resistance and coating corrosion resistance in a welded joint. The excess weld metal is the outermost layer of the weld metal, and while the welded joint is used, the coating film applied to the area of the excess weld metal is relatively more likely to receive severe collision and mechanical friction with other objects than a surface of the coating film applied to the surrounding smooth parent material. In addition, since the excess weld metal itself has a complicated convex shape, the coating film of the excess weld metal tends to be thinner than the coating film of the surrounding parent material in the coating process. For these reasons, the coating film easily peels off from the surface of the excess weld metal, and thus the surface of the excess weld metal is likely to become the starting point of corrosion in which the coating film destruction progressively progresses at an early stage from the start of use of the steel structure.

Therefore, a new welding material capable of imparting excellent weather resistance and coating corrosion resistance equal to or greater than those of the parent material to the weld metal of the joint is required.

Regarding the problems, for example, Patent Document 3 proposes a wire for gas shield arc welding which is suitable for welding of high Ni-based highly anti-weathering steel, enables good welding workability, particularly good slag delamination, and imparts corrosion resistance to sea salt to a weld metal without deteriorating the corrosion resistance of a parent material. However, with the technology proposed in Patent Document 3, it is difficult to obtain the effect of prolonging the coating life of a structure including the weld metal.

Particularly, in welding of bridges, horizontal fillet welding is performed on a reinforcing material called a rib in many cases. Therefore, in welding of bridges, a flux-cored wire for gas shield arc welding which is excellent in welding workability in horizontal fillet welding, bead shape, bead appearance, and defect resistance is required. Furthermore, since the wire for gas shield arc welding contains a relatively large amount of Ni, there is also a problem in that hot cracking easily occurs during welding.

For example, Patent Documents 4, 5, and 6 propose a flux-cored wire for gas shield arc welding having excellent corrosion resistance.

However, in a case where the flux-cored wire for gas shield arc welding proposed in Patent Documents 4, 5, and 6 is applied to horizontal fillet welding, problems occur in that pits are generated and the bead shape, the bead appearance, and the welding workability such as slag delamination are poor. In addition, although an effect of improving corrosion resistance of a weld metal is obtained by conventional examinations on chemical components such as containing Cu, Cr and Ni, the effect of prolonging the coating life of a structure including the weld metal is not obtained.

Furthermore, even in the weld metal obtained by the welding material described in Patent Documents 3 to 6, delamination was easily induced, and thus there was a problem in that the delamination becomes the starting point of corrosion in a high floating salinity environment. This is because the coating film applied to the excess weld metal as the outermost layer of a welded joint tends to be thinner than the coating film applied to the surrounding flat parent material due to the complicated convex shape of the excess weld Further flux-cored wire compositions are disclosed in Patent Documents 7-9.

[Prior Art Document]

[Patent Document]

[Patent Document 1] Japanese Unexamined Patent Application, First Publication No. 2008-163374
[Patent Document 2] Japanese Unexamined Patent Application, First Publication No. 2007-262555
[Patent Document 3] Japanese Unexamined Patent Application, First Publication No. 2003-311471
[Patent Document 4] Japanese Unexamined Patent Application, First Publication No. 2000-102893
[Patent Document 5] Japanese Unexamined Patent Application, First Publication No. 2000-288781
[Patent Document 6] Japanese Unexamined Patent Application, First Publication No. 2004-230456
[Patent Document 7] Japanese Unexamined Patent Application, First Publication JP 2017 042787
[Patent Document 8] Japanese Unexamined Patent Application, First Publication JP 2013 226578
[Patent Document 9] Japanese Unexamined Patent Application, First Publication JP 2018 043288

[Disclosure of the Invention]

[Problems to be Solved by the Invention]

An object of the invention is to provide a method of manufacturing a flux-cored wire which can provide a weld metal which has excellent mechanical properties and is excellent in welding workability, weldability, weather resistance of a weld part, and coating corrosion resistance even in a case where horizontal fillet welding is performed on bridges, harbor structures, or corrosion-resistant steel which is used in a high floating salinity environment such as a seaside area, a flux-cored wire, and a method of manufacturing a welded joint. In this specification, excellent welding workability means that the amount of spatters is small, and the bead shape, the bead appearance, and the slag delamination are excellent. Likewise, excellent weldability means that no pits are formed and hot cracking does not occur. Excellent mechanical properties mean that the tensile strength and the toughness are excellent.

[Means for Solving the Problem]

The invention is as defined by the independent claims, with particular embodiments defined in the dependent claims.

[Effects of the Invention]

According to a flux-cored wire which is obtained by a method of manufacturing a flux-cored wire of the invention and a welded joint formed of the flux-cored wire, it is possible to obtain a weld metal which has excellent mechanical properties and is excellent in welding workability, weldability, weather resistance of a weld part, and coating corrosion resistance even in a case where horizontal fillet welding is performed on bridges, harbor structures, or corrosion-resistant steel which is used in a high floating salinity environment such as a seaside area.

[Brief Description of the Drawings]

FIG. 1 is a diagram showing a position of a sample for a corrosion test piece for evaluating corrosion resistance of a weld part.

FIG. 2 is a diagram schematically showing the shape of a corrosion test piece for evaluating coating corrosion resistance of a weld part, and a cross cut.

FIG. 3 is a diagram schematically showing a corrosion test method (SAE J2334 test, conditions per cycle).

FIG. 4 is a cross-sectional view of a flux-cored wire in a manufacturing stage.

FIG. 5 is a cross-sectional view of a flux-cored wire manufactured by caulking.

FIG. 6 is a cross-sectional view of a flux-cored wire manufactured by welding.

[Embodiments of the Invention]

In order to solve the problems, the inventors experimentally produced various flux-cored wires (hereinafter, may be abbreviated as "wire"), and examined details thereof.

First, the inventors investigated the influence of the chemical composition (hereinafter, may be referred to as "components") in the wire on the corrosion resistance in a corrosion environment with a large amount of dispersed salt. As a result, the inventors have found that the corrosion resistance in a corrosion environment with a large amount of dispersed salt can be improved by adding Cu and Sn as chemical components of the flux-cored wire.

Furthermore, the inventors have found that the bead shape and the bead appearance are improved by adjusting the Ti oxide content, the Si oxide content, the Zr oxide content, the Al content, the Fe oxide content, the Al oxide content, and the fluorine compound content in the wire, and the slag delamination is improved by adjusting the Si oxide content, the Zr oxide content, the Al content, the Fe oxide content, and the total amount of a Na compound and a K compound. The inventors have also found that the pit resistance and reducing the amount of spatters are improved by adjusting the Ti oxide content, the Si oxide content, and the Mg content in the wire, and the mechanical properties are improved by adjusting the C content, the Si content, and the Mn content in the wire.

However, the inventors have found that it is also required to consider the interaction between the above-described elements in order to improve the corrosion resistance of a weld metal in a corrosion environment with a large amount of dispersed salt. Specifically, the inventors have found that in a case where the ratio between the content ratio of Sn (and Sb) and Mo and W as alloy compositions is not within a predetermined range, especially in a high floating salinity environment, it is difficult to prevent the corrosion depth immediately under a coating film damage portion from being increased in a case where coating film damages are generated by the above-described deterioration in the coating film, and the coating delamination resistance is lowered.

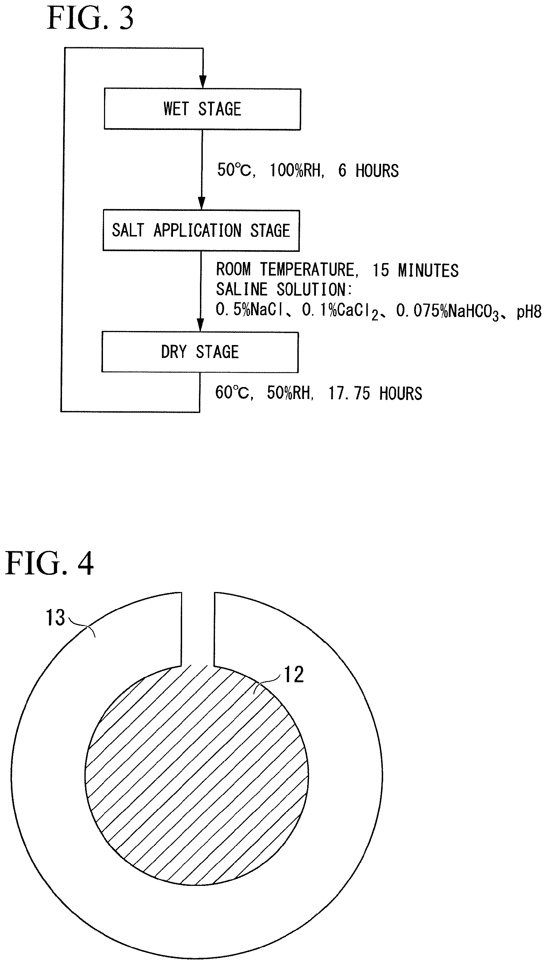

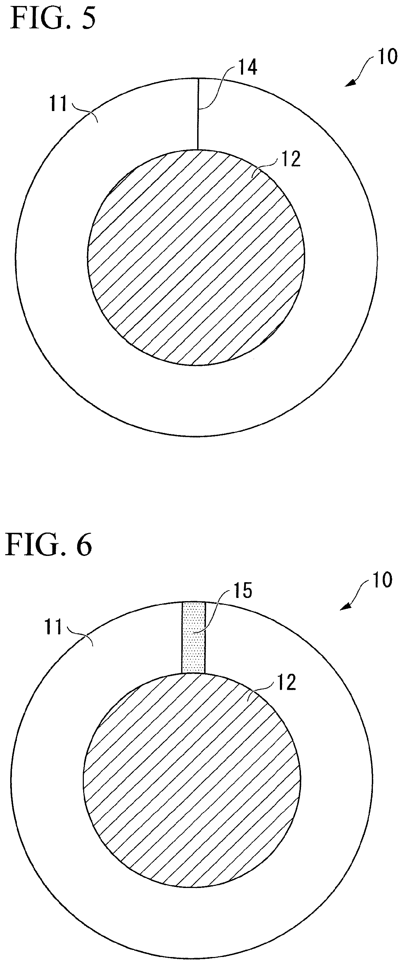

Hereinafter, a method of manufacturing a flux-cored wire 10 according to this embodiment will be described with reference to the drawings. FIG. 4 is a cross-sectional view of a flux-cored wire 10 in a manufacturing stage, and FIG. 5 is a cross-sectional view of a flux-cored wire 10 manufactured by caulking. The method of manufacturing a flux-cored wire 10 according to this embodiment in which the inside of a steel sheath 11 is filled with a flux 12 includes a step of filling the inside of a steel sheet 13 with the flux 12 while forming the steel sheet into a round shape (see FIG. 4), a step of joining both ends of the steel sheet 13 to form a steel pipe, and a step of rolling and annealing the steel pipe to obtain the flux-cored wire 10. Rolling and annealing are performed in order to make the wire 10 thin so as to be usable as a welding material and to soften the wire 10. The chemical composition of the steel sheet 13 is substantially the same as that of the steel sheath 11.

Means for joining is not particularly limited, and examples thereof include caulking and welding. A wire 10 manufactured by caulking shown in FIG. 5 has a seam 14. On the other hand, a flux-cored wire 10 manufactured by welding shown in FIG. 6 is a so-called seamless wire having a weld part 15 without the seam 14. The seamless wire is preferable since it can be further heat-treated to reduce the amount of hydrogen in the wire. In addition, since the moisture-absorption amount after the manufacturing is small, the amount of diffusible hydrogen of a weld metal can be reduced and the crack resistance can be improved. FIG. 6 is a cross-sectional view of a flux-cored wire 10 manufactured by welding.

For the purpose of improving the feedability of the wire during welding, the method of manufacturing a flux-cored wire 10 according to this embodiment may further include a step of plating an outer surface of the steel sheath 11 and/or a step of applying a lubricant to the outer surface of the steel sheath 11. The plating is, for example, copper plating. The lubricant is, for example, vegetable oil or PTFE oil.

In the method of manufacturing a flux-cored wire 10 according to this embodiment, the chemical compositions of the steel sheath 11 and the flux 12 are controlled within a predetermined range. The components contained in the steel sheath 11 and the flux 12 melt during welding to form a weld metal, and a part thereof is oxidized and discharged as slag to the outside of the weld metal. Therefore, the components to be described below are thought to provide the same effect even in a case where the components are contained in any of the steel sheath 11 and the flux 12. For the above reason, it is not necessary to distinguish the chemical composition of the steel sheath 11 from the chemical composition of the flux 12 in the manufacturing method according to this embodiment.

Hereinafter, unless otherwise specified, a chemical composition (component) existing in the form of oxide or fluoride will be defined as a slag composition, and a chemical composition (component) existing as another single metal or alloy will be defined as an alloy composition.

C, P, and S are not metal elements. However, for the sake of convenience, these are included as alloy compositions in this embodiment. Regarding Al and Bi, oxides thereof are considered to exhibit the same action as that of Al and Bi as alloy compositions, and thus the oxides are substantially handled as alloy compositions. The amount of an element to be described below is the amount of an element existing as an alloy composition as long as there is no particular specification such as the fact that the element is a slag composition. The alloy composition may be contained in any of the steel sheath 11 and the flux 12, but the slag composition is usually contained only in the flux 12.

In manufacturing of a flux-cored wire 10 according to this embodiment, the diameter and the filling rate (the ratio of the mass of the flux 12 to the total mass of the flux-cored wire 10) of the flux-cored wire 10 to be manufactured and the design values (target values) of the chemical composition of the flux-cored wire 10 are previously determined. As the steel sheet 13 which is a raw material of the steel sheath, a material having a specific chemical composition is usually used. From documents showing the chemical composition (for example, the result of analysis of the chemical composition of the steel sheet 13, or an inspection certificate or catalog of a steel manufacturer), the chemical composition of the steel sheath 11 can be grasped. Therefore, it is possible to determine the design values (target values) of the chemical composition of the flux 12 from the filling rate and the design values (target values) of the chemical composition of the steel sheath 11 and the chemical composition of the flux-cored wire 10. In addition to the determined design values (target values) of the chemical composition of the flux 12, raw materials of the flux 12 are selected from documents (for example, a report, certificate, or catalog of a raw material manufacturer) showing the chemical compositions of the raw materials of the flux 12 (both the raw materials of the slag compositions and the raw materials of the metal components), and the mixing ratio of the raw materials is determined.

That is, the raw materials of the flux 12 selected according to the above procedure are mixed with the mixing ratio determined according to the above procedure to produce the flux 12. Using the flux 12 manufactured as described above and the steel sheet 13, a flux-cored wire 10 having a designed chemical composition can be manufactured. In a case where the flux-cored wire 10 is plated, it is necessary to control the chemical compositions of the steel sheath 11 and the flux 12 according to the chemical composition and the thickness of the plating.

In the following description, the unit "%" for the chemical composition represents the mass% with respect to the total mass of the flux-cored wire 10 (total mass of the steel sheath 11 and the flux 12) unless otherwise specified. Here, the total mass of the flux-cored wire 10 is the total mass of the steel sheath 11 and the flux 12, and in a case where the surface of the steel sheath 11 is plated, the mass of the plating is included in the mass of the steel sheath 11. However, the mass of a lubricant applied to the outer surface of the steel sheath 11 is not included in the total mass of the flux-cored wire 10.

[C: 0.03% to 0.10%]

C is an element which is contained in the wire to obtain the strength and toughness of a weld metal required for a welded structure. C is a component contained in the steel sheath 11, and may be in a metal powder contained in a small amount in an iron alloy such as Fe-Si, Fe-Mn, and Fe-Si-Mn in the flux 12. In a case where the C content is less than 0.03%, the strength and toughness of the weld metal are decreased. On the other hand, in a case where the C content exceeds 0.10%, the toughness of the weld metal is decreased with an increase in the strength of the weld metal. Accordingly, the C content is set to 0.03% to 0.10%. The lower limit of the C content is preferably 0.04% or 0.05%. The upper limit of the C content is preferably 0.09% or 0.08%. C may exist as a component of the steel sheath 11 and as a component of a metal powder and an alloy powder in the flux 12. That is, it is possible to manufacture a flux-cored wire 10 having the above-described C content by controlling the C content of the steel sheath 11 and the C content of the flux 12.

[Si: 0.40% to 0.85%]

Si is an element acting as a deoxidizing agent and contained to secure the strength and toughness of a weld metal. Si is a component contained in the steel sheath 11, and may be as a metal Si and in Fe-Si, Fe-Si-Mn, and the like in the flux 12. In a case where the Si content is less than 0.40%, pits are generated due to insufficient deoxidation. In a case where the Si content is less than 0.40%, the strength and toughness of a weld metal are decreased. On the other hand, in a case where the Si content exceeds 0.85%, the strength of the weld metal is increased, and thus the toughness of the weld metal is decreased. Accordingly, the Si content is set to 0.40% to 0.85%. The lower limit of the Si content is preferably 0.55% or 0.65%. The upper limit of the Si content is preferably 0.75% or 0.70%.

Si may exist as a component of the steel sheath 11 and as a metal Si and a component of an alloy powder such as Fe-Si and Fe-Si-Mn in the flux 12. That is, it is possible to manufacture a flux-cored wire 10 having the above-described Si content by controlling the Si content of the steel sheath 11 and the Si content of the flux 12.

[Mn: 1.5% to 3.5%]

Mn is an element acting as a deoxidizing agent and contained in the wire to secure the strength and toughness of a weld metal. In a case where the Mn content is less than 1.5%, pits are generated due to insufficient deoxidation. In a case where the Mn content is less than 1.5%, the strength and toughness of the weld metal are decreased. On the other hand, in a case where the Mn content exceeds 3.5%, the strength of the weld metal is increased, and thus the toughness of the weld metal is decreased. Accordingly, the Mn content is set to 1.5% to 3.5%. The lower limit of the Mn content is preferably 2.4% or 2.6%. The upper limit of the Mn content is preferably 3.0% or 2.8%.

Mn may exist as a component of the steel sheath 11 and as a metal Mn and a component of an alloy powder such as Fe-Mn and Fe-Si-Mn in the flux 12. That is, it is possible to manufacture a flux-cored wire 10 having the above-described Mn content by controlling the Mn content of the steel sheath 11 and the Mn content of the flux 12.

[P: 0.020% or less]

[S: 0.020% or less]

Since P and S are elements which may adversely affect the mechanical characteristics of a weld metal and impair the corrosion resistance of the weld metal, it is most preferable that P and S are not contained in the wire. Therefore, the lower limits of the P content and the S content are 0%. However, P and S may be contained within a range not impairing the characteristics of the weld metal since a lot of costs are required to completely remove P and S from the material of the wire. In the flux-cored wire 10 according to this embodiment, 0.020% or less of P and 0.020% or less of S are allowed. The upper limit of the P content or the S content may be 0.015%, 0.010%, or 0.005%. The lower limit of the P content or the S content may be 0.001%, 0.002%, or 0.005%.

By controlling the P content and the S content of the steel sheath 11 and the P content and the S content of the flux 12 as in the case of C and Si, it is possible to manufacture a flux-cored wire 10 having the above-described P content and S content.

[Cu: 0.03% to 0.70%]

Cu is an element acting to improve the corrosion resistance of a weld metal. In a case where the Cu content is less than 0.03%, the corrosion resistance of the weld metal is deteriorated. On the other hand, in a case where the Cu content exceeds 0.70%, the effect of improving the corrosion resistance of the weld metal is saturated. In a case where the Cu content exceeds 0.70%, the toughness of the weld metal is decreased. Accordingly, the Cu content is set to 0.03% to 0.70%. The lower limit of the Cu content is preferably 0.05%, 0.15%, 0.17%, or 0.20%. The upper limit of the Cu content is preferably 0.35%, 0.32%, or 0.30%.

The reason why Cu improves the weather resistance and coating delamination resistance of a weld metal is that Cu reduces the rate of a dissolution reaction (corrosion reaction) of a Cu-containing weld metal itself, and in the Cu-containing weld metal, a corrosion product (rust) formed on a surface (such as an excess weld metal portion) has a characteristic fine and dense structure, and thus forms a highly corrosion-resistant rust layer inhibiting permeation of water, oxygen, chloride ions, and the like.

Cu may exist as a component of the steel sheath 11 itself, a plating component of the steel sheath 11, or a metal Cu in the flux 12. That is, it is possible to manufacture a flux-cored wire 10 having the above-described Cu content by controlling the Cu content of the steel sheath 11, the Cu content of the plating, and the Cu content of the flux 12.

[Sn: 0.05% to 0.30%]

Sn is an element having an effect of improving the corrosion resistance of a weld metal. In a case where the Sn content is less than 0.05%, the corrosion resistance is deteriorated. On the other hand, in a case where the Sn content exceeds 0.30%, hot cracking easily occurs. Accordingly, the Sn content is set to 0.05% to 0.30%. The lower limit of the Sn content is preferably 0.10% or 0.12%. The upper limit of the Sn content is preferably 0.25%, 0.20%, or 0.18%.

Sn may be contained as a component of the steel sheath 11 or as a metal Sn or a Sn compound in the flux 12. It is possible to manufacture a flux-cored wire 10 having the above-described Sn content primarily by controlling the Sn content of the steel sheath 11 and the Sn content of the flux 12.

The reason why Sn improves the weather resistance and coating delamination resistance of a weld metal is that the metal Sn in the weld metal is eluted as a tin ion (II) ($Sn^{2+}$) and exhibits an inhibiting action in a portion exposed to the environment, that is, in an acidic chloride solution to inhibit the corrosion in an anode in which the pH decreases. In addition, since the metal Sn in the weld metal also acts to reduce an iron (III) ion ($Fe^{3+}$) ($2Fe^{3+}+Sn^{2+}\rightarrow 2Fe^{2+}+Sn^{4+}$), the corrosion promoting action of $Fe^{3+}$ is inhibited, and the weather resistance in a high floating salinity environment is improved.

[Mg: 0.05% to 0.50%]

Mg is an element which acts as a strong deoxidizing agent, and thus has an effect of preventing the generation of pits. In a case where the Mg content is less than 0.05%, the effect of Mg as a deoxidizing agent is not exhibited, and pits are generated. On the other hand, in a case where the Mg content exceeds 0.50%, the amount of spatters is increased due to a rough arc. Accordingly, the Mg content is set to 0.05% to 0.50%. The lower limit of the Mg content is preferably 0.15%, 0.18%, or 0.20%. The upper limit of the Mg content is preferably 0.35%, 0.30%, or 0.25%.

A general Mg content of the steel sheath 11 is almost 0%. For this reason, Mg often exists in the wire as a metal Mg or an alloy powder such as Al-Mg in the flux 12. That is, it is possible to manufacture a flux-cored wire 10 having the above-described Mg content primarily by controlling the Mg content of the flux 12.

[Al: 0.05% to 0.50%]

Al is an element which acts as a deoxidizing agent and acts to increase the viscosity of slag by existing as an Al oxide in the molten slag to thus suppress retreat of the molten pool during horizontal fillet welding, thereby maintaining sufficient slag enclosing properties. In a case where the Al content is less than 0.05%, the bead has a convex shape, and thus undercut occurs in the upper leg portion. On the other hand, in a case where the Al content exceeds 0.50%, the bead shape loses smoothness, and thus the bead has a swelling toe portion. In a case where the Al content exceeds 0.50%, solidification unevenness occurs in the molten slag and the slag delamination is deteriorated. Accordingly, the Al content is set to 0.05% to 0.50%. The lower limit of the Al content is preferably 0.07%, 0.10%, or 0.15%. The upper limit of the Al content is preferably 0.25% or 0.20%.

Al may exist as a component of the steel sheath 11 or as a metal Al powder, an Fe-Al alloy powder, an Al-Mg alloy powder, or the like in the flux 12. That is, it is possible to manufacture a flux-cored wire 10 having the above-described Al content and the above-described Al oxide content by primarily controlling the Al content of the steel sheath 11 and the Al content of the flux 12. In order to adjust the Al content of the flux-cored wire 10 within the above-described ranges, a steel sheath 11 having the above-described Al content and a flux 12 having the above-described Al content may be used.

[Ti Oxide: 1.50% to Less Than 4.60% in terms of $TiO_2$ Equivalent]

A Ti oxide which is a slag composition acts to uniformly enclose the entire bead by slag. In addition, the Ti oxide has an effect of stably sustaining an arc, thereby reducing the amount of spatters.

In a case where the $TiO_2$ equivalent of the Ti oxide is less than 1.50%, the amount of slag generated is not sufficient, and thus the bead cannot be uniformly enclosed. Accordingly, the bead appearance is deteriorated due to seizure of the slag on the bead surface. In a case where the $TiO_2$ equivalent of the Ti oxide is less than 1.50%, the arc stabilization effect is not exhibited, and thus the amount of spatters is increased. On the other hand, in a case where the $TiO_2$ equivalent of the Ti oxide is 4.60% or more, the arc is stabilized, and the amount of spatters thus is decreased. However, the viscosity of the slag is increased, and thus the slag becomes thick, and the bead has a swelling toe portion. In a case where the $TiO_2$ equivalent of the Ti oxide is 4.60% or more, pits are easily generated. Accordingly, the $TiO_2$ equivalent of the Ti oxide is set to 1.50% to less than 4.60%. The lower limit of the $TiO_2$ equivalent of the Ti oxide is preferably 2.50%, 2.80%, or 3.00%. The upper limit of the $TiO_2$ equivalent of the Ti oxide is preferably 4.30%, 4.00%, 3.70%, or 3.50%.

The Ti oxide may primarily exist as rutile, titanium oxide, titanium slag, iluminite, sodium titanate, potassium titanate, or the like in the flux 12. Therefore, it is possible to manufacture a flux-cored wire 10 having the above-described Ti oxide content primarily by controlling the Ti oxide content of the flux 12.

Here, the method of calculating an equivalent will be described with the $TiO_2$ equivalent of the Ti oxide as an example. The $TiO_2$ equivalent of the Ti oxide is the mass% of $TiO_2$ with respect to the total mass of the wire in a case where all the Ti oxides (for example, $TiO_2$, $Ti_2O_3$, $Ti_3O_5$, sodium titanate, and potassium titanate) contained in the wire are regarded as $TiO_2$. Accordingly, the $TiO_2$ equivalent is obtained by measuring the total mass of only Ti, obtained by excluding O from the mass of the Ti oxide, and substituting the total Ti content into the following Expression.

$$(TiO_2 \text{ Equivalent}) = (\text{Mass\% of Ti Which Forms Ti Oxide With respect to Total}$$

$$\text{Mass of Wire}) \times (\text{Expression Weight of } TiO_2)/(\text{Atomic Weight of Ti}): \text{Expression A}$$

The $SiO_2$ equivalent of a Si oxide, the $ZrO_2$ equivalent of a Zr oxide, the FeO equivalent of a Fe oxide, and the $Al_2O_3$ equivalent of an Al oxide can also be obtained by the same calculation.

[Si Oxide: 0.30% to 1.00% in terms of $SiO_2$ Equivalent]

A Si oxide which is a slag composition acts to increase the viscosity of molten slag, thereby improving slag delamination. In a case where the $SiO_2$ equivalent of the Si oxide is less than 0.30%, the slag delamination is deteriorated due to a poor slag enclosing state, and the bead shape and the bead appearance are also deteriorated. On the other hand, in a case where the $SiO_2$ equivalent of the Si oxide exceeds 1.00%, the amount of spatters is increased. Furthermore, in a case where the $SiO_2$ equivalent of the Si oxide exceeds 1.00%, pits and gas grooves are easily generated. Accordingly, the $SiO_2$ equivalent of the Si oxide is set to 0.30% to 1.00%. The lower limit of the $SiO_2$ equivalent of the Si oxide is preferably 0.50% or 0.60%. The upper limit of the $SiO_2$ equivalent of the Si oxide is preferably 0.90% or 0.80%.

The Si oxide may primarily exist as silica sand, zircon sand, feldspar, sodium silicate, potassium silicate, or the like in the flux 12. Therefore, it is possible to manufacture a flux-cored wire 10 having the above-described Si oxide content (0.30% to 1.00% in terms of $SiO_2$ equivalent) primarily by controlling the Si oxide content of the flux 12.

[Zr Oxide: 0.10% to 0.50% in terms of $ZrO_2$ Equivalent]

A Zr oxide which is a slag composition acts to increase slag enclosing properties in horizontal fillet welding, thereby forming a smooth bead shape. In a case where the $ZrO_2$ equivalent of the Zr oxide is less than 0.10%, the bead shape is rough, and a convex bead shape is obtained. Thus, the slag delamination is deteriorated. On the other hand, in a case where the $ZrO_2$ equivalent of the Zr oxide exceeds 0.50%, the bead is likely to have a convex shape. Accordingly, the $ZrO_2$ equivalent of the Zr oxide is set to 0.10% to 0.50%. The lower limit of the $ZrO_2$ equivalent of the Zr oxide is preferably 0.15% or 0.20%. The upper limit of the $ZrO_2$ equivalent of the Zr oxide is preferably 0.40% or 0.30%.

The Zr oxide may primarily exist as zircon sand, zirconium oxide, or the like in the flux 12. In some cases, the Zr oxide may be contained in a small amount in the above-described Ti oxide. Therefore, it is possible to manufacture a flux-cored wire 10 having the above-described Zr oxide content (0.10% to 0.50% in terms of $ZrO_2$ equivalent) primarily by controlling the Zr oxide content of the flux 12.

[Fe Oxide: 0.10% to 1.00% in terms of FeO Equivalent]

A Fe Oxide such as FeO and $Fe_2O_3$ acts to adjust the viscosity and solidification temperature of molten slag and to eliminate the swelling of a bead toe portion, thereby improving conformability with a lower plate. In a case where the FeO equivalent of the Fe oxide is less than 0.10%, the bead toe portion swells, and thus the shape of the bead toe portion is deteriorated. On the other hand, in a case where the FeO equivalent of the Fe oxide exceeds 1.00%, the slag enclosing state is deteriorated, and thus the slag delamination is deteriorated and the bead toe portion swells. Accordingly, the bead shape and the bead appearance are also deteriorated. Accordingly, the FeO equivalent of the Fe oxide is set to 0.10% to 1.00%. The lower limit of the FeO equivalent of the Fe oxide is preferably 0.20%, 0.30%, or 0.40%. The upper limit of the FeO equivalent of the Fe oxide is preferably 0.80%, 0.70%, or 0.60%.

The Fe oxide exists primarily in the flux 12 in many cases, and it is possible to manufacture a flux-cored wire 10 having the above-described Fe oxide content (0.10% to 1.00% in terms of FeO equivalent) primarily by controlling the Fe oxide content of the flux 12.

[Al Oxide: 0.05% to 0.50% in terms of $Al_2O_3$ Equivalent]

In a case where an Al oxide constitutes molten slag, it acts to improve the slag enclosing properties, thereby preventing undercut on the upper leg side of a fillet bead. In a case where the $Al_2O_3$ equivalent of the Al oxide is less than 0.05%, undercut easily occurs on the upper leg side of the fillet bead. On the other hand, in a case where the $Al_2O_3$ equivalent of the Al oxide exceeds 0.50%, a bead shape in which a bead toe portion on the lower leg side of the fillet bead swells is obtained. Accordingly, the $Al_2O_3$ equivalent of the Al oxide is set to 0.05% to 0.50%. The lower limit of the $Al_2O_3$ equivalent of the Al oxide is preferably 0.10%, 0.15%, or 0.20%. The upper limit of the $Al_2O_3$ equivalent of the Al oxide is preferably 0.35%, 0.30%, or 0.25%.

In many cases, the Al oxide exists primarily as a component such as alumina or feldspar in the flux 12. Therefore, it is possible to manufacture a flux-cored wire 10 having the above-described Al oxide content (0.05% to 0.50% in terms of $Al_2O_3$ equivalent) primarily by controlling the Al oxide content of the flux 12.

[Total of Na Compound and K Compound: 0.050% to 0.200% in terms of Sum of $Na_2O$ Equivalent and $K_2O$ Equivalent]

A Na compound and a K compound not only act as an arc stabilizer, but also act as a slag forming agent to suppress a rapid increase in the viscosity of molten slag during solidification to thus increase the pit resistance, thereby forming a smooth bead shape. The Na compound and the K compound may exist as solid components of liquid glass formed of sodium silicate, potassium silicate, and the like in the flux, or fluorine compounds such as sodium fluoride and potassium silicofluoride.

In a case where the sum of the $Na_2O$ equivalent of the Na compound and the $K_2O$ equivalent of the K compound is less than 0.050%, a large amount of spatters having a large diameter is generated, pits and gas grooves are also easily generated, the bead has a rough surface, and the bead shape and the bead appearance are deteriorated. On the other hand, in a case where the sum of the $Na_2O$ equivalent of the Na compound and the $K_2O$ equivalent of the K compound exceeds 0.200%, the slag delamination, the bead shape, and the bead appearance are deteriorated, and thus the amount of spatters are also increased. Accordingly, the sum of the $Na_2O$ equivalent of the Na compound and the $K_2O$ equivalent of the K compound is set to 0.050% to 0.200%. The lower limit of the sum of the $Na_2O$ equivalent of the Na compound and the $K_2O$ equivalent of the K compound is preferably 0.080% or 0.100%. The upper limit of the sum of the $Na_2O$ equivalent of the Na compound and the $K_2O$ equivalent of the K compound is preferably 0.150% or 0.120%.

In general, the content of the Na compound and the K compound in the steel sheath 11 is substantially 0%. Therefore, it is possible to manufacture a flux-cored wire 10 having the above-described content of the Na compound and the K compound (0.050% to 0.200% in terms of sum of $Na_2O$ equivalent and $K_2O$ equivalent) primarily by controlling the content of the Na compound and the K compound in the flux 12.

The $Na_2O$ equivalent of the Na compound is the mass% of $Na_2O$ with respect to the total mass of the wire in a case where all the Na compounds contained in the wire are regarded as $Na_2O$. The $K_2O$ equivalent of the K compound is the mass% of $K_2O$ with respect to the total mass of the wire in a case where all the K compounds contained in the wire are regarded as $K_2O$. The $Na_2O$ equivalent of the Na compound and the $K_2O$ equivalent of the K compound are calculated by the same means as in the case of the $TiO_2$ equivalent of the Ti oxide described above.

[Fluorine Compound: 0.02% to 0.20% in terms of F Equivalent]

A fluorine compound which is a slag composition acts to increase the directivity of an arc, thereby forming a stable molten pool. In addition, the fluorine compound acts to adjust the viscosity of slag, thereby forming a smooth bead shape, and also acts to improve the pit resistance. The fluorine compound may exist as magnesium fluoride, cryolite, sodium fluoride, potassium silicofluoride, or the like in the flux 12. In general, the fluorine compound content of the steel sheath 11 is substantially 0%. Therefore, it is possible to manufacture a flux-cored wire 10 having the above-described fluorine compound content (0.02% to 0.20% in terms of F equivalent) primarily by controlling the fluorine compound content of the flux 12.

In a case where the F equivalent of the fluorine compound is less than 0.02%, the arc becomes unstable and the conformability of the lower leg portion on the lower plate side is deteriorated. In a case where the F equivalent of the fluorine compound is less than 0.02%, pits are easily generated. On the other hand, in a case where the F equivalent of the fluorine compound exceeds 0.20%, the viscosity of slag is decreased and thin slag which is difficult to remove is left at the upper leg portion of the bead. Thus, the slag delamination is deteriorated, and the bead has a convex shape. Accordingly, the F equivalent of the fluorine compound is set to 0.02% to 0.20%. The lower limit of the F equivalent of the fluorine compound is preferably 0.03% or 0.05%. The upper limit of the F equivalent of the fluorine compound is preferably 0.15%, 0.10%, or 0.07%.

The F equivalent of the fluorine compound is, by mass% with respect to the total mass of the wire, the total amount of F contained in all the fluorine compounds in the wire.

In the method of manufacturing a flux-cored wire 10 according to this embodiment, the steel sheath 11 and the flux 12 contain the above elements and compounds as essential requirements, but may further optionally contain the following elements and compounds. However, even in a case where the optional components listed below are not contained, the method of manufacturing a flux-cored wire 10 according to this embodiment can solve the problems, and thus the lower limit of the amount of each of the optional components is 0%.

[Metal Bi and Bi Oxide: 0% to 0.035% in total in terms of Bi Equivalent]

Bi acts to improve the slag delamination, put a gloss on a bead surface, and improve the bead appearance, and thus may be contained in the wire 10. Bi may exist as a component in the steel sheath and as a metal Bi, oxidized Bi, and the like in the flux 12. However, in a case where the total Bi equivalent of Bi and the Bi oxide exceeds 0.035%, the slag at the top of the bead flows, the entire bead surface cannot be enclosed by the slag, and thus the bead appearance is deteriorated. Accordingly, the total Bi equivalent of the metal Bi and the Bi oxide in the flux 12 is set to 0.035% or less. The upper limit of the total Bi equivalent of the metal Bi and the Bi oxide is preferably 0.030% or 0.025%. In order to obtain a slag delamination improving effect, the lower limit of the total Bi equivalent of the metal Bi and the Bi oxide is preferably 0.005%, 0.010%, or 0.015%.

A steel sheet 13 containing Bi is very expensive. Therefore, it is possible to manufacture a flux-cored wire 10 having the above-described Bi content and Bi oxide content primarily by controlling the Bi content and the Bi oxide content of the flux 12. In order to adjust the Bi content and the Bi oxide content of the flux-cored wire 10 within the above-described ranges, a steel sheath 11 having the above-described chemical composition (Bi and Bi oxide: 0% to 0.035% in total in terms of Bi equivalent) and a flux 12 having the above-described chemical composition (Bi and Bi oxide: 0% to 0.035% in total in terms of total Bi equivalent) may be used.

The Bi equivalent is the sum of the mass% of Bi existing as a metal or an alloy with respect to the total mass of the wire and the mass% of Bi in the Bi oxide (for example, $Bi_2O_3$) with respect to the total mass of the wire. Since Bi existing as a metal or an alloy and the Bi oxide provide the same effect, both the amount of Bi existing as a metal or an alloy and the Bi oxide content are controlled as a Bi equivalent in the method of manufacturing a flux-cored wire 10 according to this embodiment.

[Ni: 0% to 2.50%]

[Ti: 0% to 0.30%]

[B: 0% to 0.010%]

Ni, Ti, and B may be contained in the wire 10 to secure the toughness of a weld metal at low temperatures. However, in a case where the Ni content exceeds 2.50%, hot cracking easily occurs. Accordingly, the Ni content is set to 2.50% or less. The upper limit of the Ni content is preferably 2.30%, 2.00%, or 1.50%. In order to secure the toughness of the weld metal at low temperatures, the lower limit of the Ni content is preferably 0.10% or 0.20%.

In a case where the Ti content exceeds 0.30%, slag is seized on the bead surface, the bead appearance is deteriorated, and the amount of spatters is also increased. In a case where the Ti content exceeds 0.30%, the toughness of a weld metal is also decreased. In addition, in a case where the B content exceeds 0.010%, hot cracking easily occurs. Accordingly, the Ti content is set to 0.30% or less, and the B content is set to 0.010% or less. The upper limit of the Ti content is preferably 0.25% or 0.20%. The upper limit of the B content is preferably 0.008% or 0.005%.

Ni may be contained as a component of the steel sheath 11, and as a metal Ni and in Fe-Ni and the like in the flux 12. Ti and B may be contained in the wire 10 to secure the toughness of a weld metal at low temperatures. Ti may exist as a component of the steel shell 11 and as a metal Ti and a component of Fe-Ti in the flux 12. B may exist as a component of the steel sheath 11 and as a component of Fe-B or Fe-Mn-B in the flux 12. That is, it is possible to manufacture a flux-cored wire 10 having the above-described Ni content, Ti content, and B content primarily by controlling the Ni content, the Ti content, and the B content of the steel sheath 11 and the Ni content, the Ti content, and the B content of the flux 12. In order to adjust the Ni content, the Ti content, and the B content of the flux-cored wire 10 within the above-described ranges, a steel sheath 11 having the above-described chemical composition (Ni: 0% to 2.50%, Ti: 0% to 0.30%, B: 0% to 0.010%) and a flux 12 having the above-described chemical composition (Ni: 0% to 2.50%, Ti: 0% to 0.30%, B: 0% to 0.010%) may be used.

In order to improve the low temperature toughness of the weld metal, one or more selected from the group consisting of 0.10% or more of Ni, 0.03% or more of Ti, and 0.002% or more of B are preferably contained in the wire 10. Particularly, in order to improve the Charpy absorbed energy at -40°C, it is necessary to satisfy one or more of Ni: 0.10% to 2.50%, Ti: 0.03% to 0.30%, and B: 0.002% to 0.010%.

[Mo: 0% to 0.400%]

Mo has an effect of improving the strength of a weld metal, and thus may be contained in the wire 10. However, in a case where the Mo content exceeds 0.400%, it is impossible to prevent the average corrosion depth immediately under a coating film damage portion from being increased due to competition with Sn ionization especially in a case where coating film damages are generated in a high floating salinity environment. Accordingly, the upper limit of the Mo content is preferably 0.400%. In addition, in order to obtain the effect of improving the strength of the weld metal, the lower limit of the Mo content is preferably 0.010%. The upper limit of the Mo content is preferably 0.300%, 0.100%, or 0.040%.

Mo may exist in the wire 10 as a component of the steel sheath 11 and as a metal Mo and an alloy powder such as Fe-Mo in the flux 12. That is, it is possible to manufacture a flux-cored wire 10 having the above-described Mo content primarily by controlling the Mo content of the steel sheath 11 and the Mo content of the flux 12. In order to adjust the Mo content of the flux-cored wire 10 within the above-described range, a steel sheath 11 having the above-described Mo content (that is, 0% to 0.400%) and a flux 12 having the above-described Mo content (that is, 0% to 0.400%) may be used.

[W: 0% to 0.200%]

W may be contained in the wire 10 since it contributes to the improvement of the strength of a weld metal. However, in a case where the W content exceeds 0.200%, it is impossible to prevent the average corrosion depth immediately under a coating film damage portion from being increased due to competition with Sn ionization especially in a case where coating film damages are generated in a high floating salinity environment. Accordingly, the upper limit of the W content is set to 0.200%. The upper limit of the W content is preferably 0.150%, 0.100%, or 0.010%.

W may exist in the wire 10 as a component of the steel sheath 11 or as an alloy powder of a metal W or the like in the flux 12. That is, it is possible to manufacture a flux-cored wire 10 having the above-described W content primarily by controlling the W content of the steel sheath 11 and the W content of the flux 12. In order to adjust the W content of the flux-cored wire 10 within the above-described range, a steel sheath 11 having the above-described W content (that is, 0% to 0.200%) and a flux 12 having the above-described W content (that is, 0% to 0.200%) may be used.

[Cr: 0% to 0.500%]

Cr may be contained in the wire since it contributes to the improvement of the strength of a weld metal. However, in a case where the Cr content exceeds 0.500%, it is impossible to prevent the corrosion depth immediately under a coating film damage portion from being increased due to competition with Sn ionization especially in a case where coating film damages are generated in a high floating salinity environment. Accordingly, the upper limit of the Cr content is preferably 0.500%. The upper limit of the Cr content is preferably 0.100% or 0.050%.

Cr may exist in the wire as a component of the steel sheath 11, or as a metal Cr or an alloy powder such as Fe-Cr in the flux 12. That is, it is possible to manufacture a flux-cored wire 10 having the above-described Cr content primarily by controlling the Cr content of the steel sheath 11 and the Cr content of the flux 12. In order to adjust the Cr content of the flux-cored wire 10 within the above-described range, a steel sheath 11 having the above-described Cr content (that is, 0% to 0.500%) and a flux 12 having the above-described Cr content (that is, 0% to 0.500%) may be used.

[Nb: 0% to 0.300%]

Nb may be contained in the wire 10 since it contributes to the improvement of the strength of a weld metal by precipitation strengthening. However, in a case where the Nb content exceeds 0.300%, Nb forms coarse precipitates and reduces the toughness of the weld metal. Accordingly, the upper limit of the Nb content is set to 0.300%. The upper limit of the Nb content may be 0.250% or 0.200%. In order to obtain the above-described effect, the lower limit of the Nb content may be 0.050% or 0.100%.

Nb may exist in the wire 10 as a component of the steel sheath 11, a metal Nb or an alloy powder such as Fe-Nb in the flux 12. That is, it is possible to manufacture a flux-cored wire 10 having the above-described Nb content primarily by controlling the Nb content of the steel sheath 11 and the Nb content of the flux 12. In order to adjust the Nb content of the flux-cored wire 10 within the above-described range, a steel sheath 11 having the above-described Nb content (that is, 0% to 0.300%) and a flux 12 having the above-described Nb content (that is, 0% to 0.300%) may be used.

[V: 0% to 0.300%]

V may be contained in the wire 10 since it contributes to the improvement of the strength of a weld metal. However, in a case where the V content exceeds 0.300%, the strength of the weld metal is excessively increased, and thus the toughness of the weld metal is decreased. Accordingly, the V content is set to 0.300% or less. In order to obtain the effect of improving the strength of the weld metal, the V content is preferably 0.010% or more. The upper limit of the V content is preferably 0.200% or 0.100%.

V may exist in the wire 10 as a component of the steel sheath 11, a metal V or an alloy powder such as Fe-V in the flux 12. That is, it is possible to manufacture a flux-cored wire 10 having the above-described V content primarily by controlling the V content of the steel sheath 11 and the V content of the flux 12. In order to adjust the V content of the flux-cored wire 10 within the above-described range, a steel sheath 11 having the above-described V content (that is, 0% to 0.300%) and a flux 12 having the above-described V content (that is, 0% to 0.300%) may be used.

[N: 0% to 0.0080%]

N is an element which impairs the toughness and the like of a weld metal, and thus it is most preferable that N is not contained in the wire 10. Therefore, the lower limit of the N content is 0%. However, N may be contained within a range not impairing the properties of the weld metal since a lot of costs are required to completely remove N from the material of the wire. In the flux-cored wire 10 according to this embodiment, 0.0080% or less of N is allowed. The upper limit of the N content may be 0.0070%, 0.0060%, or 0.0050%. In order to adjust the N content of the flux-cored wire 10 within the above-described range, a steel sheath 11 having the above-described N content (that is, 0% to 0.0080%) and a flux 12 having the above-described N content (that is, 0% to 0.0080%) may be used.

[Ca: 0% to 0.0050%]

[REM: 0% to 0.0050%]

Ca and REM have an effect of improving the ductility and toughness of a weld metal by changing forms of a sulfide and an oxide. In order to obtain this effect, the Ca content may be 0.0002% or more, and the REM content may be 0.0002% or more. On the other hand, Ca and REM are also elements which increase the amount of spatters, thereby impairing weldability. Accordingly, the upper limit of the Ca content is 0.0050%, and the upper limit of the REM content is 0.0050%. The upper limit of the Ca content may be 0.0040% or 0.0030%. The upper limit of the REM content may be 0.0040% or 0.0030%.

Ca and REM may exist in the wire 10 as a component of the steel sheath 11, or as a Ca compound or a REM compound in the flux 12. That is, it is possible to manufacture a flux-cored wire 10 having the above-described Ca content and REM content primarily by controlling the Ca content and the REM content of the steel sheath 11 and the Ca content and the REM content of the flux 12. In order to adjust the Ca content and the REM content of the flux-cored wire 10 within the above-described ranges, a steel sheath 11 having the above-described Ca content (that is, 0% to 0.0050%) and REM content (that is, 0% to 0.0050%) and a flux 12 having the above-described Ca content (that is, 0% to 0.0050%) and REM content (that is, 0% to 0.0050%) may be used.

[Sb: 0% to 0.0050%]

Sb is an element which imparts weather resistance and coating delamination resistance to a weld metal as in the case of Sn. Accordingly, the Sb content may be 0.0010% or 0.0020%. However, in a case where the Sb content exceeds 0.0050%, the toughness of the weld metal is decreased due to the segregation of Sb at the grain boundary of the weld metal. Accordingly, the upper limit of the Sb content is 0.0050%. The upper limit of the Sb content may be 0.0040% or 0.0030%.

Sb may exist in the wire 10 as a component of the steel sheath 11, or as a metal Sb or an alloy powder such as a Sb compound in the flux 12. That is, it is possible to manufacture a flux-cored wire 10 having the above-described Sb content primarily by controlling the Sb content of the steel sheath 11 and the Sb content of the flux 12. In order to adjust the Sb content of the flux-cored wire 10 within the above-described range, a steel sheath 11 having the above-described Sb content (that is, 0% to 0.0050%) and a flux 12 having the above-described Sb content (that is, 0% to 0.0050%) may be used.

## [Sn+Sb>Mo+W: Expression 1]

In the method of manufacturing a flux-cored wire 10 according to this embodiment, the total amounts of Sn and Sb is required to exceed the total amounts of Mo and W. This is because in a case where the total amounts of Sn and Sb is equal to or less than the total amounts of Mo and W, especially in a high floating salinity environment, it is difficult to prevent the average corrosion depth immediately under a coating film damage portion from being increased in a case where coating film damages are generated by deterioration in the coating film, and the coating delamination resistance is decreased. The above requirement can be stated in other words: an index X obtained by substituting the Sn content, the Sb content, the Mo content, and the W content into the following Expression is more than 0. The components of the flux-cored wire 10 are preferably controlled such that the index X is 0.05 or more, 0.08 or more, or 0.10 or more.

## Index X=(Sn+Sb)-(Mo+W)

In the method of manufacturing a flux-cored wire 10 according to this embodiment, the remainder of the chemical composition of the wire 10 consists of Fe and impurities. Fe exists as a component of the steel sheath 11 and a component in the flux 12 (Fe powder, Fe alloy powder (for example, Fe-Mn alloy powder, Fe-Si alloy powder, and the like)). A Fe powder is used to adjust components other than Fe, and the content thereof may be optionally adjusted to 0% with respect to the total mass of the wire. In a case where the Fe powder content is too high, the toughness of a weld metal may be deteriorated by the iron oxide on the surface of the Fe powder. Therefore, the upper limit of the Fe powder content may be 10.0% or less with respect to the total mass of the wire. The impurities refer to raw materials such as ore or scrap in industrial manufacturing of the wire, or components mixed by various factors in the manufacturing steps, and mean those which are acceptable within a range not adversely affecting the method of manufacturing a wire according to this embodiment. For example, the wire according to this embodiment may contain O as impurities other than O of the oxides, and such O is acceptable as long as the content thereof is 0% to 0.080%. The total amount of O, including O of the Ti oxide, the Si oxide, the Zr oxide, the Fe oxide, the Al oxide, the Na compound, the K compound, the fluorine compound, and the Bi oxide described above, is usually 0.5% to 6.0%.

In the method of manufacturing a flux-cored wire 10 according to this embodiment, the filling rate (the ratio of the total mass of the flux to the total mass of the wire) is not particularly limited. However, from the viewpoint of productivity, the filling rate is preferably 8% to 20% with respect to the total mass of the wire. The diameter of the wire is not particularly limited, but preferably 1.0 mm to 2.0 mm in consideration of convenience during welding.

Next, a flux-cored wire 10 according to another aspect of the invention and a method of manufacturing a welded joint according to another aspect of the invention will be described.

The flux-cored wire 10 according to another aspect of the invention is a flux-cored wire 10 obtained by the method of manufacturing a flux-cored wire 10 according to the embodiment described above. The method of manufacturing a welded joint according to another aspect of the invention is a method of manufacturing a welded joint including a step of welding using the flux-cored wire 10 manufactured by the method of manufacturing a flux-cored wire 10 according to the embodiment described above.

The flux-cored wire 10 according to this embodiment contains Cu and Sn, and the Sn content, the Sb content, the W content, and the Mo content satisfy Expression 1. Accordingly, with the flux-cored wire 10 and the method of manufacturing a welded joint according to this embodiment, it is possible to obtain a weld metal having excellent corrosion resistance and mechanical properties in welding of corrosion-resistant steel which is used in an environment which contains corrosive substances such as a high floating salinity environment. In addition, the alloy compositions of the flux-cored wire 10 according to this embodiment are within the above-described predetermined ranges. Accordingly, according to the flux-cored wire 10 and the method of manufacturing a welded joint of this embodiment, together with excellent pit resistance, good welding workability can be obtained such as a small amount of spatters, no cracking during welding, and excellence in the bead shape, bead appearance, and slag delamination, and thus high welding efficiency and an improvement of the quality of a weld part can be achieved.

The application of the flux-cored wire 10 and the method of manufacturing a welded joint according to this embodiment is not particularly limited, but it is particularly preferable to apply the flux-cored wire 10 and the method of manufacturing a welded joint to the manufacturing of steel for structure, especially harbor facilities, bridges, building/civil structures, or steel structures such as tanks, ship/marine structures, railways, or containers. In addition, the material of the steel to which the flux-cored wire 10 and the method of manufacturing a welded joint according to this embodiment are applied is not particularly limited, and may be normal steel such as carbon steel or low-alloy steel. Anti-weathering steel or low-alloy steel containing Ni, Sn, and the like is more advantageous from the viewpoint of weather resistance and coating corrosion resistance. The form of welding which is performed on the flux-cored wire 10 according to this embodiment and the form of welding which is included in the method of manufacturing a welded joint according to this embodiment are not particularly limited, but gas shield arc welding is preferably performed. In addition, since no pits are generated, the bead shape, the bead appearance, and the welding workability such as slag delamination are good, and the coating life of a structure including the weld metal is prolonged, horizontal fillet welding is preferably performed.

It is difficult to specify the chemical composition of the flux-cored wire 10 obtained by the method of manufacturing a flux-cored wire 10 according to this embodiment by analysis. This is because it is not easy to determine whether an element such as Ti, Si, Na, and Ca contained in the flux-cored wire 10 exists in the form of metal or alloy, oxide, fluoride, or carbonate in the flux-cored wire 10. For example, it is difficult to separate Si (metal Si) existing as a metal or an alloy from Si existing as an oxide ($SiO_2$). This is because a method of selectively dissolving only a metal Si to subject the metal Si to wet analysis has not been established. In addition, the flux 12 may contain a fluoride, or the fluorine liberated from the flux 12 may damage the analytical instrument. Furthermore, the method of manufacturing a flux-cored wire 10 may include a step of annealing a steel wire with the flux 12 sealed therein, and the annealing may unexpectedly change the composition of the nonmetallic substances of the flux 12.

[Examples]

Hereinafter, the effects of the invention will be described in more detail by examples.

SPCC specified in JIS G 3141: 2011 was used as a steel sheath and filling with a flux was performed. Then, it was reduced in diameter (intermediate annealing for softening of a sheath and for dehydrogenation was performed once) to produce various seamless type flux-cored wires having components shown in Tables 1-1 to 1-4, respectively, with a filling rate of 13.5% and a wire diameter of 1.2 mm without a gap penetrating through the steel sheath. No. 21 was manufactured by caulking. The numerical values in Tables 1-1 to 1-4 are design values, and represent the mass% with respect to the total mass of the flux-cored wire (total mass of the steel sheath and the flux). In manufacturing of a flux-cored wire, the content of each compound was controlled based on an analysis report on the chemical composition of a raw material of a flux, certificate, or catalog. The remainder "bal." in Tables 1-1 to 1-4 represents that the remainder of the chemical composition consists of Fe and impurities.

[Table 1-1]

| Classification | Wire No. | Chemical Composition (mass%) | | | | | | | | | | | | | | | | | | | |
|---|---|---|---|---|---|---|---|---|---|---|---|---|---|---|---|---|---|---|---|---|---|
| | | $TiO_2$ Equivalent | $SiO_2$ Equivalent | $ZrO_2$ Equivalent | FeO Equivalent | $Al_2O_3$ Equivalent | C | Si | Mn | Cu | Al | Sn | Mg | $Na_2O$ Equivalent (A) | $K_2O$ Equivalent (B) | (A)+(B) | F Equivalent | Bi Equivalent | Ti | B | Ni |
| Invention Examples | 1 | 1.51 | 0.81 | 0.12 | 0.84 | 0.32 | 0.06 | 0.70 | 1.82 | 0.36 | 0.16 | 0.11 | 0.21 | 0.120 | 0.011 | 0.131 | 0.05 | - | - | - | - |
| | 2 | 2.70 | 0.98 | 0.11 | 0.45 | 0.31 | 0.06 | 0.57 | 2.01 | 0.63 | 0.24 | 0.21 | 0.24 | 0.078 | 0.056 | 0.134 | 0.04 | - | - | - | - |
| | 3 | 2.61 | 0.52 | 0.49 | 0.11 | 0.22 | 0.04 | 0.82 | 2.82 | 0.09 | 0.18 | 0.09 | 0.26 | 0.022 | 0.093 | 0.115 | 0.08 | 0.006 | - | - | - |
| | 4 | 2.68 | 0.80 | 0.16 | 0.98 | 0.23 | 0.03 | 0.61 | 2.94 | 0.28 | 0.46 | 0.13 | 0.06 | 0.164 | 0.026 | 0.190 | 0.02 | 0.034 | - | - | - |
| | 5 | 2.84 | 0.73 | 0.22 | 0.78 | 0.49 | 0.09 | 0.43 | 1.87 | 0.37 | 0.34 | 0.28 | 0.44 | 0.117 | 0.024 | 0.141 | 0.06 | 0.030 | - | - | - |
| | 6 | 3.25 | 0.34 | 0.42 | 0.92 | 0.46 | 0.10 | 0.41 | 3.41 | 0.05 | 0.19 | 0.16 | 0.25 | 0.028 | 0.031 | 0.059 | 0.18 | - | 0.29 | - | - |
| | 7 | 3.17 | 0.81 | 0.32 | 0.29 | 0.36 | 0.09 | 0.84 | 3.22 | 0.43 | 0.44 | 0.21 | 0.48 | 0.055 | 0.003 | 0.059 | 0.08 | - | - | 0.010 | - |
| | 8 | 2.57 | 0.72 | 0.46 | 0.18 | 0.21 | 0.07 | 0.55 | 3.46 | 0.68 | 0.19 | 0.26 | 0.12 | 0.060 | 0.043 | 0.103 | 0.19 | - | 0.03 | 0.002 | - |
| | 9 | 4.22 | 0.46 | 0.49 | 0.52 | 0.45 | 0.06 | 0.68 | 3.12 | 0.69 | 0.17 | 0.05 | 0.35 | 0.131 | 0.036 | 0.167 | 0.02 | - | - | - | 0.10 |
| | 10 | 3.63 | 0.33 | 0.47 | 0.40 | 0.31 | 0.08 | 0.70 | 1.51 | 0.34 | 0.48 | 0.09 | 0.15 | 0.051 | 0.069 | 0.120 | 0.08 | - | - | - | 2.47 |
| | 11 | 3.11 | 0.58 | 0.22 | 0.65 | 0.06 | 0.05 | 0.70 | 3.19 | 0.25 | 0.05 | 0.06 | 0.49 | 0.062 | 0.029 | 0.091 | 0.11 | - | - | - | 1.82 |
| | 12 | 3.56 | 0.36 | 0.42 | 0.69 | 0.06 | 0.05 | 0.58 | 2.30 | 0.03 | 0.44 | 0.29 | 0.44 | 0.020 | 0.084 | 0.104 | 0.14 | 0.007 | - | - | 0.88 |
| | 13 | 2.23 | 0.78 | 0.35 | 0.33 | 0.05 | 0.07 | 0.46 | 3.50 | 0.48 | 0.35 | 0.22 | 0.17 | 0.100 | 0.090 | 0.190 | 0.13 | 0.031 | - | - | 1.23 |
| | 14 | 4.59 | 0.74 | 0.37 | 0.16 | 0.30 | 0.03 | 0.73 | 2.31 | 0.11 | 0.33 | 0.14 | 0.27 | 0.061 | 0.024 | 0.085 | 0.19 | - | 0.06 | 0.007 | 2.12 |
| | 15 | 3.79 | 0.51 | 0.35 | 0.75 | 0.06 | 0.10 | 0.52 | 2.12 | 0.10 | 0.18 | 0.12 | 0.44 | 0.025 | 0.026 | 0.051 | 0.11 | 0.007 | 0.15 | 0.006 | 1.33 |
| | 16 | 1.63 | 0.86 | 0.19 | 0.22 | 0.08 | 0.06 | 0.70 | 2.80 | 0.66 | 0.26 | 0.22 | 0.17 | 0.136 | 0.022 | 0.157 | 0.02 | 0.033 | 0.17 | 0.008 | 0.56 |
| | 17 | 2.84 | 0.73 | 0.22 | 0.78 | 0.49 | 0.09 | 0.40 | 1.72 | 0.35 | 0.35 | 0.28 | 0.44 | 0.117 | 0.024 | 0.141 | 0.06 | 0.030 | - | - | - |
| | 18 | 3.79 | 0.51 | 0.35 | 0.75 | 0.06 | 0.10 | 0.53 | 2.15 | 0.10 | 0.18 | 0.12 | 0.43 | 0.025 | 0.026 | 0.051 | 0.11 | 0.007 | 0.15 | 0.006 | 1.33 |
| | 19 | 3.56 | 0.36 | 0.42 | 0.69 | 0.06 | 0.05 | 0.58 | 2.28 | 0.03 | 0.44 | 0.29 | 0.44 | 0.020 | 0.084 | 0.104 | 0.14 | 0.007 | - | - | 0.88 |
| | 20 | 3.56 | 0.36 | 0.42 | 0.69 | 0.06 | 0.05 | 0.57 | 2.27 | 0.04 | 0.44 | 0.29 | 0.44 | 0.020 | 0.084 | 0.104 | 0.14 | 0.007 | - | - | 0.88 |
| | 21 | 3.56 | 0.36 | 0.42 | 0.69 | 0.06 | 0.05 | 0.56 | 2.34 | 0.03 | 0.44 | 0.29 | 0.44 | 0.020 | 0.084 | 0.104 | 0.14 | 0.007 | - | - | 0.88 |
| | 22 | 3.56 | 0.36 | 0.42 | 0.69 | 0.06 | 0.05 | 0.59 | 2.27 | 0.03 | 0.44 | 0.29 | 0.44 | 0.020 | 0.084 | 0.104 | 0.14 | 0.007 | - | - | 0.88 |
| | 23 | 4.22 | 0.46 | 0.49 | 0.52 | 0.45 | 0.06 | 0.67 | 3.15 | 0.69 | 0.16 | 0.05 | 0.35 | 0.131 | 0.036 | 0.167 | 0.02 | - | - | - | 0.10 |

The symbol "-" indicates that the element is not contained intentionally.

[Table 1-2]

| Classification | Wire No. | Chemical Composition (mass%) | | | | | | | | | | | | | | | | | | | |
|---|---|---|---|---|---|---|---|---|---|---|---|---|---|---|---|---|---|---|---|---|---|
| | | TiO$_2$ Equivalent | SiO$_2$ Equivalent | ZrO$_2$ Equivalent | FeO Equivalent | Al$_2$O$_3$ Equivalent | C | Si | Mn | Cu | Al | Sn | Mg | Na$_2$O Equivalent (A) | K$_2$O Equivalent (B) | (A)+(B) | F Equivalent | Bi Equivalent | Ti | B | Ni |
| Comparative Examples | 24 | 1.44 | 0.51 | 0.04 | 0.83 | 0.33 | 0.06 | 0.68 | 2.61 | 0.36 | 0.16 | 0.09 | 0.33 | 0.133 | 0.050 | 0.183 | 0.11 | - | 0.17 | 0.004 | 1.22 |
| | 25 | 5.06 | 0.61 | 0.19 | 0.25 | 0.22 | 0.02 | 0.72 | 1.81 | 0.36 | 0.40 | 0.19 | 0.16 | 0.036 | 0.115 | 0.151 | 0.16 | - | - | - | - |
| | 26 | 4.81 | 0.24 | 0.31 | 0.24 | 0.32 | 0.12 | 0.48 | 1.74 | 0.42 | 0.29 | 0.18 | 0.38 | 0.060 | 0.006 | 0.066 | 0.14 | - | - | - | - |
| | 27 | 4.16 | 1.06 | 0.56 | 0.76 | 0.36 | 0.06 | 0.81 | 3.30 | 0.35 | 0.27 | 0.07 | 0.19 | 0.059 | 0.080 | 0.139 | 0.03 | - | - | - | 0.13 |
| | 28 | 2.24 | 0.50 | 0.41 | 0.04 | 0.14 | 0.04 | 0.35 | 1.68 | 0.36 | 0.43 | 0.16 | 0.32 | 0.052 | 0.031 | 0.083 | 0.03 | - | - | - | - |
| | 29 | 3.82 | 0.68 | 0.42 | 1.06 | 0.21 | 0.07 | 0.70 | 3.20 | 0.58 | 0.41 | 0.32 | 0.23 | 0.052 | 0.108 | 0.159 | 0.05 | - | - | - | - |
| | 30 | 3.66 | 0.81 | 0.37 | 0.65 | 0.04 | 0.08 | 0.88 | 2.24 | 0.61 | 0.10 | 0.12 | 0.27 | 0.052 | 0.001 | 0.053 | 0.06 | 0.011 | - | - | - |
| | 31 | 2.75 | 0.72 | 0.27 | 0.52 | 0.55 | 0.09 | 0.66 | 3.23 | 0.24 | 0.24 | 0.09 | 0.04 | 0.053 | 0.017 | 0.070 | 0.13 | - | - | 0.008 | - |
| | 32 | 5.00 | 0.69 | 0.29 | 0.43 | 0.14 | 0.08 | 0.76 | 2.01 | 0.75 | 0.04 | 0.17 | 0.32 | 0.103 | 0.035 | 0.139 | 0.16 | - | - | - | - |
| | 33 | 2.53 | 0.41 | 0.27 | 0.20 | 0.40 | 0.06 | 0.59 | 3.61 | 0.08 | 0.55 | 0.27 | 0.56 | 0.060 | 0.012 | 0.072 | 0.11 | - | - | - | - |
| | 34 | 4.41 | 0.78 | 0.48 | 0.95 | 0.13 | 0.06 | 0.43 | 2.68 | 0.18 | 0.06 | 0.04 | 0.41 | 0.032 | 0.026 | 0.058 | 0.12 | 0.039 | - | - | - |
| | 35 | 4.57 | 0.88 | 0.27 | 0.33 | 0.28 | 0.05 | 0.48 | 1.41 | 0.13 | 0.16 | 0.08 | 0.29 | 0.162 | 0.075 | 0.237 | 0.18 | - | - | - | - |
| | 36 | 2.71 | 0.31 | 0.34 | 0.93 | 0.46 | 0.06 | 0.81 | 3.40 | 0.02 | 0.48 | 0.21 | 0.20 | 0.159 | 0.010 | 0.170 | 0.01 | - | - | 0.012 | - |
| | 37 | 3.26 | 0.32 | 0.31 | 0.34 | 0.41 | 0.07 | 0.45 | 1.78 | 0.47 | 0.47 | 0.02 | 0.45 | 0.086 | 0.109 | 0.195 | 0.25 | - | - | - | - |
| | 38 | 2.06 | 0.61 | 0.38 | 0.73 | 0.13 | 0.05 | 0.43 | 2.69 | 0.69 | 0.32 | 0.13 | 0.03 | 0.090 | 0.031 | 0.121 | 0.05 | - | 0.37 | - | 0.56 |
| | 39 | 3.51 | 0.89 | 0.33 | 0.86 | 0.21 | 0.03 | 0.53 | 2.28 | 0.51 | 0.23 | 0.12 | 0.28 | 0.013 | 0.019 | 0.032 | 0.08 | 0.029 | 0.13 | 0.008 | 2.65 |
| | 40 | 2.84 | 0.73 | 0.22 | 0.78 | 0.49 | 0.09 | 0.45 | 1.87 | 0.37 | 0.33 | 0.28 | 0.45 | 0.117 | 0.024 | 0.141 | 0.06 | 0.030 | - | - | - |
| | 41 | 2.84 | 0.73 | 0.22 | 0.78 | 0.49 | 0.09 | 0.42 | 1.87 | 0.37 | 0.34 | 0.28 | 0.44 | 0.117 | 0.024 | 0.141 | 0.06 | 0.030 | - | - | - |

The symbol "-" indicates that the element is not contained intentionally.

[Table 1-3]

| Classification | Wire No. | Chemical Composition (mass%) | | | | | | | | | | | | | * Others |
|---|---|---|---|---|---|---|---|---|---|---|---|---|---|---|---|
| | | Mo | W | Cr | Nb | V | P | S | N | Ca | REM | Sb | Fe Powder | Index X (= (Sn+Sb)-(Mo+W)) | |
| Invention Examples | 1 | - | - | - | - | - | 0.011 | 0.009 | 0.0024 | - | - | - | 4.8 | 0.10 | bal. |
| | 2 | - | - | - | - | - | 0.008 | 0.009 | 0.0035 | - | - | - | 0.1 | 0.20 | bal. |
| | 3 | - | - | - | - | - | 0.010 | 0.009 | 0.0038 | - | - | - | 4.9 | 0.08 | bal. |
| | 4 | - | - | - | - | - | 0.011 | 0.010 | 0.0038 | - | - | - | 5.1 | 0.13 | bal. |
| | 5 | - | - | - | - | - | 0.010 | 0.009 | 0.0042 | - | - | - | 4.8 | 0.27 | bal. |
| | 6 | - | - | - | - | - | 0.011 | 0.012 | 0.0046 | - | - | - | 4.8 | 0.15 | bal. |
| | 7 | - | - | - | - | - | 0.009 | 0.012 | 0.0044 | - | - | - | 4.8 | 0.20 | bal. |
| | 8 | - | - | - | - | - | 0.012 | 0.013 | 0.0047 | - | - | - | 4.8 | 0.25 | bal. |
| | 9 | - | - | - | - | - | 0.010 | 0.009 | 0.0043 | - | - | - | 5.0 | 0.04 | bal. |
| | 10 | - | - | - | - | - | 0.011 | 0.009 | 0.0049 | - | - | - | 5.0 | 0.09 | bal. |
| | 11 | - | - | - | - | - | 0.008 | 0.009 | 0.0045 | - | - | - | 9.9 | 0.05 | bal. |
| | 12 | - | - | - | - | - | 0.010 | 0.009 | 0.0043 | - | - | - | 6.3 | 0.28 | bal. |
| | 13 | - | - | - | - | - | 0.009 | 0.010 | 0.0048 | - | - | - | 6.3 | 0.21 | bal. |
| | 14 | - | - | - | - | - | 0.012 | 0.013 | 0.0041 | - | - | - | 6.3 | 0.14 | bal. |
| | 15 | - | - | - | - | - | 0.010 | 0.010 | 0.0040 | - | - | - | 4.8 | 0.10 | bal. |
| | 16 | - | - | - | - | - | 0.011 | 0.011 | 0.0046 | - | - | - | 6.3 | 0.21 | bal. |
| | 17 | 0.211 | - | - | - | - | 0.010 | 0.009 | 0.0038 | - | - | - | 4.8 | 0.07 | bal. |
| | 18 | - | 0.082 | - | - | - | 0.009 | 0.011 | 0.0045 | - | - | - | 4.8 | 0.04 | bal. |
| | 19 | - | - | - | 0.124 | - | 0.010 | 0.009 | 0.0047 | - | - | - | 6.3 | 0.29 | bal. |
| | 20 | - | - | - | - | 0.153 | 0.010 | 0.009 | 0.0045 | - | - | - | 6.3 | 0.29 | bal. |
| | 21 | - | - | 0.020 | - | - | 0.010 | 0.009 | 0.0040 | 0.0028 | - | - | 6.3 | 0.29 | bal. |
| | 22 | - | - | - | - | - | 0.010 | 0.009 | 0.0045 | - | 0.0022 | - | 6.3 | 0.28 | bal. |
| | 23 | - | - | - | - | - | 0.010 | 0.009 | 0.0043 | - | - | 0.0042 | 4.9 | 0.05 | bal. |

The symbol "-" indicates that the element is not contained intentionally.

[Table 1-4]

| Classification | Wire No. | Chemical Composition (mass%) | | | | | | | | | | | | | |
| --- | --- | --- | --- | --- | --- | --- | --- | --- | --- | --- | --- | --- | --- | --- | --- |
| | | Mo | W | Cr | Nb | V | P | S | N | Ca | REM | Sb | Fe Powder | Index X (=(Sn+Sb)-(Mo+W)) | * Others |
| Comparative Examples | 24 | - | - | - | - | - | 0.009 | 0.012 | 0.0031 | - | - | - | 5.0 | 0.08 | bal. |
| | 25 | - | - | - | - | - | 0.008 | 0.010 | 0.0040 | - | - | - | 5.0 | 0.18 | bal. |
| | 26 | - | - | - | - | - | 0.010 | 0.009 | 0.0048 | - | - | - | 4.8 | 0.17 | bal. |
| | 27 | - | - | - | - | - | 0.011 | 0.011 | 0.0043 | - | - | - | 4.8 | 0.06 | bal. |
| | 28 | - | - | - | - | - | 0.010 | 0.010 | 0.0048 | - | - | - | 4.8 | 0.15 | bal. |
| | 29 | - | - | - | - | - | 0.012 | 0.010 | 0.0038 | - | - | - | 4.8 | 0.31 | bal. |
| | 30 | - | - | - | - | - | 0.012 | 0.010 | 0.0031 | - | - | - | 4.8 | 0.11 | bal. |
| | 31 | - | - | - | - | - | 0.010 | 0.011 | 0.0036 | - | - | - | 4.8 | 0.09 | bal. |
| | 32 | - | - | - | - | - | 0.009 | 0.009 | 0.0041 | - | - | - | 4.9 | 0.17 | bal. |
| | 33 | - | - | - | - | - | 0.010 | 0.009 | 0.0039 | - | - | - | 5.0 | 0.27 | bal. |
| | 34 | - | - | - | - | - | 0.011 | 0.010 | 0.0031 | - | - | - | 4.9 | 0.04 | bal. |
| | 35 | - | - | - | - | - | 0.009 | 0.011 | 0.0038 | - | - | - | 6.3 | 0.08 | bal. |
| | 36 | - | - | - | - | - | 0.013 | 0.010 | 0.0036 | - | - | - | 6.3 | 0.20 | bal. |
| | 37 | - | - | - | - | - | 0.010 | 0.010 | 0.0037 | - | - | - | 6.3 | 0.01 | bal. |
| | 38 | - | - | - | - | - | 0.012 | 0.012 | 0.0037 | - | - | - | 4.9 | 0.12 | bal. |
| | 39 | - | - | - | - | - | 0.011 | 0.012 | 0.0042 | - | - | - | 4.8 | 0.12 | bal. |
| | 40 | 0.385 | - | - | - | - | 0.011 | 0.010 | 0.0042 | - | - | - | 4.8 | -0.11 | bal. |
| | 41 | 0.310 | 0.084 | - | - | - | 0.010 | 0.010 | 0.0038 | - | - | - | 4.8 | -0.11 | bal. |

The symbol "-" indicates that the element is not contained intentionally.

EP 3 753 670 B1

First, welding workability was examined. Experimental wires shown in Tables 1-1 to 1-4 were used to perform a horizontal fillet welding test by an automatic welder using T-fillet test pieces. The test piece was a test piece of a steel type SM490B specified in JIS G 3106: 2008 with a thickness of 12 mm and a length of 600 mm, and a surface of the steel sheet was coated with an inorganic zinc primer to promote the generation of pits such that a thickness of the film was 20 to 25 $\mu$m. The welding conditions were as follows: the welding was performed twice simultaneously at both sides under the welding conditions shown in Table 2, and the bead shape, bead appearance, slag delamination, number of pits, and spatter generation were examined.

Regarding the bead shape, whether the bead surface was flat or did not excessively swell was confirmed by visual inspection, and the bead shape was judged to be "poor" in a case where the bead had an excessively swelling shape.

Regarding the bead appearance, whether bead breakage due to unstable arc, bead necking, and pitting due to voids occurred was determined by visual inspection, and the bead appearance was judged to be "poor" in a case where the bead breakage and the like occurred. The bead appearance was judged to be "good" in a case where the bead breakage and the like did not occur.

The slag delamination was judged to be "very good" in a case where the slag was peeled off without impact of a chisel, to be "good" in a case where the slag was peeled off by impact of a chisel (the slag was not peeled off without impact of the chisel), and to be "poor" in a case where the slag remained on the bead even after impact of a chisel.

The pit resistance was judged to be "good" in a case where the amount of pits generated was 1 piece/m or less, and to be "poor" in a case where the amount of pits generated was greater than 1 piece/m.

Spatters scattering during welding were collected, and the mass of the spatters was measured. The amount of spatters was judged to be "large" in a case where the mass of the spatters per minute was 1.5 g or more, to be "slightly large" in a case where the mass of the spatters per minute was 1.0 to 1.5 g (1.0 g or more and less than 1.5 g), and to be "small" in a case where the mass of the spatters per minute was less than 1.0 g.

[Table 2]

| Test Items | Welding Position | Current (A) | Voltage (V) | Welding Speed (cm/min) | Distance Between Chip and Parent Material (mm) | Shield Gas |
|---|---|---|---|---|---|---|
| Welding Workability Evaluation Test (T-fillet) | Horizontal | 260 to 310 | 30 to 33 | 60 | 25 | 100% $CO_2$ (flow rate: 20 to 25 L/min) |
| Deposited Metal Test | Flat | 270 | 31 | 30 | 25 | |
| Corrosion Resistance Test | | | | | | |

Next, mechanical properties and corrosion resistance of a deposited metal were evaluated. In the evaluation of the mechanical properties and corrosion resistance, a deposited metal test was performed according to JIS Z 3111: 2005, and an X-ray inspection was performed. Then, a tensile test, an impact test, and a corrosion resistance evaluation test were performed. The parent material used is a corrosion-resistant steel sheet having a chemical composition containing 0.11% of C, 0.18% of Si, 1.44% of Mn, 0.011 % of P, 0.002% of S, and 0.12% of Sn. The welding conditions are as shown in Table 2.

In the X-ray inspection, in a case where slag inclusion, blow holes, incomplete penetration, or crater cracking was recognized, the type of the defect was described. In a case where the above-described defects were not recognized with a joint welding length of 500 mm, it was described as no defects.

The impact test temperature was 0°C. However, the impact test was performed at 0°C and -40°C for the deposited metal obtained from the wire containing one or more of Ni, Ti, and B.

Regarding the acceptance criteria for the mechanical properties of the deposited metal, a case where the tensile strength was 510 to 660 MPa in the tensile test and the absorbed energy at a test temperature of 0°C was 60 J or more in the impact test was accepted. In addition, regarding the deposited metals obtained from the wires (wire Nos. 6 to 16 and 18 to 23) containing one or more of Ti, B, and Ni in order to secure the low temperature toughness, a case where the absorbed energy at a test temperature of -40°C was 60 J or more was accepted. In addition, in the X-ray inspection, a case where slag inclusion, blow holes, incomplete penetration, or crater cracking was not observed was accepted.

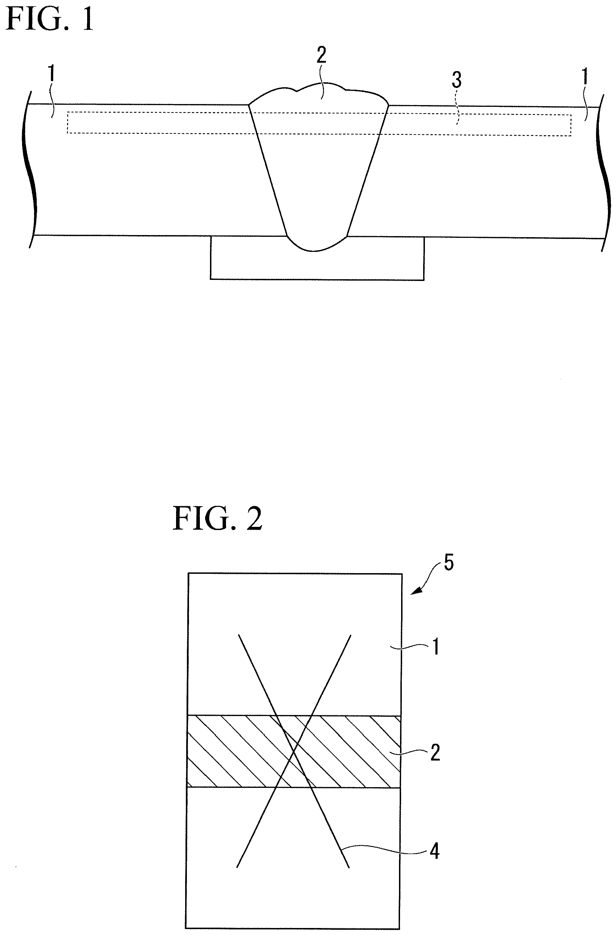

In the evaluation of the corrosion resistance, first, as shown in FIG. 1, a sample (3 mm thickness $\times$ 60 mm width $\times$ 150 mm length) for producing a corrosion test piece was collected from a position 3 at a depth of 1 mm from a surface of a parent material 1 such that a deposited metal 2 was positioned at a center, and a surface of the sample was subjected to shot blasting. Then, drying by heating was performed at a furnace temperature of 80°C to prepare a corrosion test piece material. Next, any one of a coating A (BANNOH #200 manufactured by Chugoku Marine Paints, Ltd.) and a coating B (NEO GOSEI PRIMER HB manufactured by SHINTO PAINT CO., LTD.) was applied to both surfaces of the corrosion test piece material such that a film on the steel surface had a thickness of 200 to 350 μm, and thus a corrosion test piece was produced. As shown in FIG. 2, a cross cut 4 was formed on the corrosion test piece so as to straddle the deposited metal 2, whereby a corrosion test piece 5 in which a coating film damage was simulated was produced. The cross cut 4 was formed by forming scratches reaching from the top of the coating film to the steel surface of the base material by a cutter knife such that the rectangle having the cross cut as a diagonal had a size of 100 mm in long side × 40 mm in short side. After that, the obtained corrosion test piece 5 was subjected to the evaluation of the corrosion resistance according to the Society of Automotive Engineers (SAE) J2334 test.

Here, the SAE J2334 test will be described. The SAE J2334 test is an acceleration test which is performed in a dry-wet repeating condition having three processes of wet stage (50°C, 100%RH, 6 hours), salt application stage (room temperature, dipping in a saline solution (pH 8, 0.5 mass% of NaCl, 0.1 mass% of CaCl2, and 0.075 mass% of NaHCO$_3$) for 0.25 hours), and dry stage (60°C, 50%RH, 17.75 hours) as one cycle (24 hours in total). The one cycle of the SAE J2334 test is schematically shown in FIG. 3.

In the corrosion test, a severe corrosion environment in which the amount of flying salt exceeds 1 mdd is simulated.

After 80 cycles of the SAE J2334 test, an area ratio of the delamination and swelling were measured for each test piece. In addition, coating film adhesion evaluation was performed as a test reflecting long-term coating corrosion resistance performance of actual structures. Two transparent adhesion tapes with a width of 20 mm which had been cut into a rectangle with a long side length of 100 mm were attached to the whole area corresponding to a rectangle having a cross cut as a diagonal so as not to overlap each other, and within five minutes after the attachment of the tapes, the tapes were detached for 4.0 to 8.0 seconds at an angle of about 60°. A tape delamination rate was obtained by dividing the area of the delamination by the tape delamination operation by the area of the coating film remaining immediately after 80 cycles of the SAE J2334 test. Thereafter, the residual coating film on the surface and the formed rust layer were removed. Corrosion depths of the coating film defect portions were measured, and then an average corrosion depth was calculated.

In the weather resistance/coating delamination resistance evaluation, a case where the area ratio of the delamination and swelling was less than 50% and the average corrosion depth of the coating film damage portions was less than 0.50 mm was accepted. In the coating film adhesion evaluation, the coating film adhesion was judged to be "very good" in a case where the tape delamination rate was 0% to less than 20%, to be "good" in a case where the tape delamination rate was 20% to less than 40%, and to be "poor" in a case where the tape delamination rate was 40% or more.

In the above tests, in a case where the four main evaluation items (welding workability, X-ray inspection, deposited metal test, and corrosion resistance evaluation test for weld part) satisfied all of the following conditions i to iv, "Good" was chosen in the total evaluation, and in other cases, "Bad" was chosen in the total evaluation.

i) There is no "poor" in the respective evaluation items of the welding workability (regarding the amount of spatters, "large" means "poor", and "slightly large" and "small" do not mean "poor").
ii) "No defects" in the X-ray inspection.
iii) "Accepted" in the deposited metal test.
iv) "Accepted" in the corrosion resistance evaluation test for a weld part (the evaluation of the "coating film adhesion" may be influenced not only by the corrosion resistance of the deposited metal but also by the coating corrosion resistance of the steel, and thus not included in the judgment of the total evaluation.

These results are shown in Tables 3-1 and 3-2.

[Table 3-1]

| Classification | Wire No. | Test Results | | | | | | | | | | | | Total Evaluation |
| | | Welding Workability | | | | | X-ray Inspection Results | Deposited Metal Test | | | Results of Corrosion Resistance Evaluation Test for Weld | | | |
| | | Bead Shape | Bead Appearance | Slag Delamination | Pit Resistance | Amount of Spatters | | Tensile Strength (MPa) | Absorbed Energy at 0°C (J) | Absorbed Energy at -40°C (J) | Area Ratio of Delamination and Swelling (%) | Average Corrosion Depth of Coating Film | Coating Film Adhesion | |

| Classification | Wire No. | Test Results | | | | | | | | | | | | Total Evaluation |
| | | Welding Workability | | | | | X-ray Inspection Results | Deposited Metal Test | | | Results of Corrosion Resistance Evaluation Test for Weld | | | |
| | | Bead Shape | Bead Appearance | Slag Delamination | Pit Resistance | Amount of Spatters | | Tensile Strength (MPa) | Absorbed Energy at 0°C (J) | Absorbed Energy at -40°C (J) | Area Ratio of Delamination and Swelling (%) | Average Corrosion Depth of Coating Film | Coating Film Adhesion | |
|---|---|---|---|---|---|---|---|---|---|---|---|---|---|---|
| Invention Examples | 1 | Good | Good | Good | Good | Small | No Defects | 593 | 95 | - | 34 | 0.43 | Very Good | Good |
| | 2 | Good | Good | Very Good | Good | Small | No Defects | 555 | 63 | - | 18 | 0.28 | Very Good | Good |
| | 3 | Good | Good | Very Good | Good | Small | No Defects | 580 | 90 | - | 38 | 0.41 | Very Good | Good |
| | 4 | Good | Good | Very Good | Good | Small | No Defects | 554 | 66 | - | 22 | 0.29 | Very Good | Good |
| | 5 | Good | Good | Very Good | Good | Small | No Defects | 619 | 76 | - | 17 | 0.22 | Very Good | Good |
| | 6 | Good | Good | Good | Good | Small | No Defects | 599 | 80 | 66 | 23 | 0.27 | Very Good | Good |
| | 7 | Good | Good | Good | Good | Small | No Defects | 601 | 89 | 70 | 30 | 0.33 | Very Good | Good |
| | 8 | Good | Good | Good | Good | Small | No Defects | 610 | 82 | 65 | 33 | 0.33 | Very Good | Good |
| | 9 | Good | Good | Good | Good | Small | No Defects | 605 | 97 | 81 | 18 | 0.19 | Very Good | Good |
| | 10 | Good | Good | Good | Good | Small | No Defects | 598 | 90 | 71 | 40 | 0.32 | Very Good | Good |
| | 11 | Good | Good | Good | Good | Small | No Defects | 599 | 99 | 77 | 38 | 0.39 | Very Good | Good |
| | 12 | Good | Good | Very Good | Good | Small | No Defects | 603 | 105 | 81 | 18 | 0.18 | Very Good | Good |
| | 13 | Good | Good | Very Good | Good | Small | No Defects | 615 | 103 | 83 | 35 | 0.42 | Very Good | Good |

EP 3 753 670 B1

24

(continued)

| Classification | Wire No. | Welding Workability | | | | | | Deposited Metal Test | | | Results of Corrosion Resistance Evaluation Test for Weld | | | Total Evaluation |
|---|---|---|---|---|---|---|---|---|---|---|---|---|---|---|
| | | Bead Shape | Bead Appearance | Slag Delamination | Pit Resistance | Amount of Spatters | X-ray Inspection Results | Tensile Strength (MPa) | Absorbed Energy at 0°C (J) | Absorbed Energy at 40°C (J) | Area Ratio of Delamination and Swelling (%) | Average Corrosion Depth of Coating Film | Coating Film Adhesion | |
| | 14 | Good | Good | Good | Good | Small | No Defects | 620 | 93 | 78 | 31 | 0.37 | Very Good | Good |
| | 15 | Good | Good | Very Good | Good | Small | No Defects | 656 | 99 | 75 | 43 | 0.33 | Very Good | Good |
| | 16 | Good | Good | Very Good | Good | Small | No Defects | 615 | 101 | 88 | 36 | 0.41 | Very Good | Good |
| | 17 | Good | Good | Very Good | Good | Small | No Defects | 646 | 97 | - | 45 | 0.36 | Good | Good |
| | 18 | Good | Good | Very Good | Good | Small | No Defects | 678 | 102 | 78 | 43 | 0.46 | Good | Good |
| | 19 | Good | Good | Very Good | Good | Small | No Defects | 621 | 74 | 61 | 17 | 0.18 | Very Good | Good |
| | 20 | Good | Good | Very Good | Good | Small | No Defects | 603 | 72 | 60 | 19 | 0.17 | Very Good | Good |
| | 21 | Good | Good | Very Good | Good | Slightly Large | No Defects | 603 | 115 | 79 | 17 | 0.18 | Very Good | Good |
| | 22 | Good | Good | Very Good | Good | Slightly Large | No Defects | 603 | 113 | 79 | 20 | 0.17 | Very Good | Good |
| | 23 | Good | Good | Very Good | Good | Small | No Defects | 612 | 87 | 66 | 13 | 0.12 | Very Good | Good |

Test Results

[Table 3-2]

| Classification | Wire No. | Test Results | | | | | | | | | | | | Total Evaluation |
| | | Welding Workability | | | | | X-ray Inspection Results | Deposited Metal Test | | | Results of Corrosion Resistance Evaluation Test for Weld | | | |
| | | Bead Shape | Bead Appearance | Slag Delamination | Pit Resistance | Amount of Spatters | | Tensile Strength (MPa) | Absorbed Energy at 0°C (J) | Absorbed Energy at -40°C (J) | Area Ratio of Delamination and Swelling (%) | for Weld Average Corrosion Depth of Coating Film Damage Portions (mm) | Coating Film Adhesion | |
|---|---|---|---|---|---|---|---|---|---|---|---|---|---|---|
| Comparative Examples | 24 | Poor | Poor | Poor | Good | Large | No Defects | 568 | 88 | 65 | 36 | 0.43 | Very Good | Bad |
| | 25 | Poor | Good | Good | Poor | Small | No Defects | 503 | 50 | - | 22 | 0.24 | Very Good | Bad |
| | 26 | Poor | Poor | Poor | Poor | Small | No Defects | 665 | 45 | - | 20 | 0.23 | Very Good | Bad |
| | 27 | Poor | Good | Good | Poor | Large | No Defects | 559 | 88 | 70 | 41 | 0.40 | Very Good | Bad |
| | 28 | Poor | Good | Good | Poor | Small | No Defects | 506 | 46 | - | 33 | 0.38 | Very Good | Bad |
| | 29 | Poor | Poor | Poor | Good | Small | Crater Cracking | 611 | 74 | - | 29 | 0.36 | Very Good | Bad |
| | 30 | Poor | Good | Very Good | Good | Small | No Defects | 668 | 41 | - | 30 | 0.41 | Very Good | Bad |
| | 31 | Poor | Good | Good | Poor | Small | No Defects | 582 | 96 | 84 | 41 | 0.42 | Very Good | Bad |
| | 32 | Poor | Good | Good | Good | Small | No Defects | 557 | 54 | - | 38 | 0.40 | Very Good | Bad |
| | 33 | Poor | Good | Poor | Good | Large | No Defects | 671 | 48 | - | 31 | 0.29 | Very Good | Bad |
| | 34 | Good | Poor | Good | Good | Small | No Defects | 621 | 71 | - | 70 | 0.68 | Poor | Bad |

(continued)

**Test Results**

| Classification | Wire No. | Welding Workability | | | | | | Deposited Metal Test | | | Results of Corrosion Resistance Evaluation Test for Weld | | | Total Evaluation |
|---|---|---|---|---|---|---|---|---|---|---|---|---|---|---|
| | | Bead Shape | Bead Appearance | Slag Delamination | Pit Resistance | Amount of Spatters | X-ray Inspection Results | Tensile Strength (MPa) | Absorbed Energy at 0°C (J) | Absorbed Energy at -40°C (J) | Area Ratio of Delamination and Swelling (%) | for Weld Average Corrosion Depth of Coating Film Damage Portions (mm) | Coating Film Adhesion | |
| | 35 | Poor | Poor | Poor | Poor | Large | No Defects | 505 | 49 | - | 44 | 0.43 | Very Good | Bad |
| | 36 | Poor | Good | Good | Poor | Small | Crater Cracking | 539 | 75 | 63 | 60 | 0.56 | Good | Bad |
| | 37 | Poor | Good | Poor | Good | Small | No Defects | 610 | 70 | - | 71 | 0.79 | Poor | Bad |
| | 38 | Good | Poor | Good | Poor | Large | No Defects | 556 | 100 | 78 | 33 | 0.32 | Very Good | Bad |
| | 39 | Poor | Poor | Very Good | Poor | Large | Crater Cracking | 561 | 77 | 64 | 35 | 0.41 | Very Good | Bad |
| | 40 | Good | Good | Good | Good | Small | No Defects | 663 | 89 | 66 | 39 | 0.58 | Poor | Bad |
| | 41 | Good | Good | Good | Good | Small | No Defects | 632 | 78 | 64 | 56 | 0.72 | Poor | Bad |

27

In Tables 1-1 to 1-4, 3-1, and 3-2, wire Nos. 1 to 23 are invention examples, and wire Nos. 24 to 41 are comparative examples.

In the wire Nos. 1 to 24 as the invention examples, the $TiO_2$ equivalent, the $SiO_2$ equivalent, the $ZrO_2$ equivalent, the FeO equivalent, the $Al_2O_3$ equivalent, the C content, the Si content, the Mn content, the Cu content, the Al content, the Sn content, the Mg content, the sum of the $Na_2O$ equivalent and the $K_2O$ equivalent, and the F equivalent were appropriate. Accordingly, the bead shape, the bead appearance, and the slag delamination were not "poor", only a small amount of pits was generated, the amount of spatters was not "large", there were no defects (crater cracking) in the X-ray inspection, and the tensile strength and the absorbed energy of the deposited metal were also not lower than the acceptance criterion values. The corrosion resistance evaluation test results were also good and not lower than the acceptance criterion values. In the wire Nos. 1 to 23 as the invention examples, the content of O excluding O of the compounds such as oxides was 0% to 0.080%, and the content of all O including the compounds such as oxides was 0.5% to 6.0%.

The wire Nos. 3 to 5, 12, 13, and 15 to 22 containing an appropriate amount of Bi exhibited very good slag delamination.

In the wire Nos. 6 to 8 containing an appropriate amount of one or both of Ti and B, the wire Nos. 9 to 13 and 19 to 23 containing an appropriate amount of Ni, and the wire Nos. 14 to 16 and 18 containing an appropriate amount of one or both of Ti and B and Ni, the absorbed energy of the deposited metal at -40°C was good, that is, 60 J or more.

In contrast, among the comparative examples, the wire No. 24 had a small $TiO_2$ equivalent, and thus the amount of slag formed was not sufficient and the bead could not be uniformly enclosed. Thus, the slag was seized and the bead appearance was "poor". The amount of spatters was also large. Furthermore, since the $ZrO_2$ equivalent was small, the bead shape did not become smooth, a convex bead shape was obtained, and the slag delamination was also "poor".

The wire No. 25 had a small $TiO_2$ equivalent, and thus the slag became thick, pits were generated, the viscosity of the slag increased, and the bead had a swelling toe portion. In addition, since the C content was low, the deposited metal had a low tensile strength and low absorbed energy at 0°C.

The wire No. 26 had a large $TiO_2$ equivalent and a small $SiO_2$ equivalent, and thus the slag enclosing state deteriorated, and the slag delamination, the bead shape, and the bead appearance were poor. In addition, since the C content was high, the tensile strength of the deposited metal excessively increased, and thus the ductility decreased. Accordingly, the absorbed energy at 0°C was low.

The wire No. 27 had a large $SiO_2$ equivalent, and thus the amount of spatters increased and pits were also generated. In addition, since the $ZrO_2$ equivalent was large, a convex bead shape was obtained.

The wire No. 28 had a small FeO equivalent, and thus the shape of the bead toe portion was poor. In addition, since the Si content was low, pits were generated, and the deposited metal had a low tensile strength and low absorbed energy at 0°C. The wire No. 29 had a large FeO equivalent, and thus the slag delamination deteriorated due to a poor slag enclosing state. Accordingly, the bead toe portion swelled, and the bead shape and the bead appearance were also "poor". In addition, since the Sn content was high, crater cracking occurred.

The wire No. 30 had a small $Al_2O_3$ equivalent, and thus undercut occurred on the upper leg side and the bead shape was "poor". In addition, the Si content was excessively high, the tensile strength of the deposited metal was high, and thus the absorbed energy at 0°C was low due to a decrease in the ductility.

The wire No. 31 had a large $Al_2O_3$ equivalent, and thus the bead toe portion swelled, the conformability deteriorated, and the bead shape was "poor". In addition, since the Mg content was low, pits were generated.

The wire No. 32 has an excessively high Cu content, and the absorbed energy of the deposited metal at 0°C was low. In addition, since the Al content was low, the bead had a convex shape, and undercut occurred in the upper leg portion.

The wire No. 33 had a high Al content, and thus the bead shape had no smoothness, the toe portion had a swelling shape, solidification unevenness occurred also in the molten slag, and thus the slag delamination was "poor". In addition, since the Mg content was high, the amount of spatters increased due to a rough arc. Furthermore, since the Mn content was high, the tensile strength of the deposited metal was high, and the absorbed energy at 0°C was low due to a decrease in the ductility.

The wire No. 34 had a low Sn content, and thus the area ratio of the delamination and swelling in the deposited metal was large, and the average corrosion depth of the coating film damage portions was also large. In addition, since the Bi equivalent was large, the bead appearance was "poor".

In the wire No. 35, the sum of the $Na_2O$ equivalent and the $K_2O$ equivalent was large, and thus the amount of spatters was large, the slag delamination, the bead shape, and the bead appearance were "poor". In addition, since the Mn content was low, pits were generated, and the deposited metal had a low tensile strength and low absorbed energy at 0°C.

The wire No. 36 had a low Cu content, and thus the area ratio of the delamination and swelling in the deposited metal was large, and the average corrosion depth of the coating film damage portions was also large. In addition, since the F-equivalent was small, the conformability of the lower leg portion on the lower plate side was poor, the bead shape was "poor", and pits were also generated. Furthermore, since the B content was high, crater cracking occurred.

The wire No. 37 had a low Sn content, and thus the area ratio of the delamination and swelling in the deposited metal was large, and the average corrosion depth of the coating film damage portions was also large. In addition, since the F-equivalent was large, the viscosity of the slag decreased, a convex bead shape was obtained, and the slag delamination was also "poor".

The wire No. 38 had a low Mg content, and thus pits were generated. In addition, since the Ti content was high, the amount of spatters was large, the slag was seized on the bead surface, and the bead appearance was "poor".

In the wire No. 39, the sum of the $Na_2O$ equivalent and the $K_2O$ equivalent was small, and thus the arc became unstable, the amount of large-diameter spatters was large, the bead shape and the bead appearance were "poor", and pits were also generated. In addition, since the Ni content was high, crater cracking occurred.

In the wire No. 40, the index X was 0 or less, the average corrosion depth immediately under a coating film damage portion of the deposited metal was large, and the coating film adhesion was also "poor".

In the wire No. 41, the index X was 0 or less, the area ratio of the delamination and swelling in the deposited metal was large, the average corrosion depth immediately under a coating film damage portion was large, and the coating film adhesion was also "poor".

[Brief Description of the Reference Symbols]

1: parent material (steel)

2: deposited metal

3: position of corrosion test piece

4: cross cut

5: corrosion test piece

10: flux-cored wire

11: steel sheath

12: flux

13: steel sheet

14: seam

15: weld part

**Claims**

1. A method of manufacturing a flux-cored wire in which an inside of a steel sheath is filled with a flux, the method comprising:

   filling an inside of a steel sheet with the flux while forming the steel sheet into a round shape;
   joining both ends of the steel sheet to form a steel pipe; and
   rolling and annealing the steel pipe to obtain the flux-cored wire,
   wherein a chemical composition of the flux-cored wire includes, by mass% with respect to a total mass of the flux-cored wire,

      C: 0.03% to 0.10%,
      Si: 0.40% to 0.85%,
      Mn: 1.5% to 3.5%,
      P: 0.020% or less,

S: 0.020% or less,
Cu: 0.03% to 0.70%,
Sn: 0.05% to 0.30%,
Mg: 0.05% to 0.50%,
Al: 0.05% to 0.50%,
a Ti oxide: 1.50% to less than 4.60% in terms of $TiO_2$ equivalent,
a Si oxide: 0.30% to 1.00% in terms of $SiO_2$ equivalent,
a Zr oxide: 0.10% to 0.50% in terms of $Z_rO_2$ equivalent,
a Fe oxide: 0.10% to 1.00% in terms of FeO equivalent,
an Al oxide: 0.05% to 0.50% in terms of $Al_2O_3$ equivalent,
a total of a Na compound and a K compound: 0.050% to 0.200% in terms of sum of a $Na_2O$ equivalent and a $K_2O$ equivalent,
a fluorine compound: 0.02% to 0.20% in terms of F equivalent,
a total of Bi and a Bi oxide: 0% to 0.035% in terms of Bi equivalent,
Ni: 0% to 2.50%,
Ti: 0% to 0.30%,
B: 0% to 0.010%,
Mo: 0% to 0.400%,
W: 0% to 0.200%,
Cr: 0% to 0.500%,
Nb: 0% to 0.300%,
V: 0% to 0.300%,
N: 0% to 0.0080%,
Ca: 0% to 0.0050%,
REM: 0% to 0.0050%,
Sb: 0% to 0.0050%, and
a remainder: Fe and impurities, and

a Sn content, a Sb content, a W content, and a Mo content satisfy Expression 1:

$$Sn + Sb > Mo + W: Expression\ 1$$

each element symbol in Expression 1 represents an amount of an element related to the element symbol by mass% with respect to the total mass of the flux-cored wire.

2. The method of manufacturing a flux-cored wire according to claim 1,

wherein the chemical composition of the flux-cored wire includes, by mass% with respect to the total mass of the flux-cored wire,
Mo: 0% to 0.040%, and
W: 0% to 0.010%.

3. The method of manufacturing a flux-cored wire according to claim 1 or 2,

wherein the chemical composition of the flux-cored wire includes, by mass% with respect to the total mass of the flux-cored wire,
Cu: 0.05% to 0.70%.

4. The method of manufacturing a flux-cored wire according to any one of claims 1 to 3,

wherein the chemical composition of the flux-cored wire satisfies one or more of the following, by mass% with respect to the total mass of the flux-cored wire,
Ni: 0.10% to 2.50%,
Ti: 0.03% to 0.30%, and
B: 0.002% to 0.010%.

5. The method of manufacturing a flux-cored wire according to any one of claims 1 to 4,

wherein the joining is caulking.

6. The method of manufacturing a flux-cored wire according to any one of claims 1 to 4,
   wherein the joining is welding.

7. A flux-cored wire manufactured by the method of manufacturing a flux-cored wire according to any one of claims 1 to 6.

8. A method of manufacturing a welded joint comprising:
   welding using a flux-cored wire manufactured by the method of manufacturing a flux-cored wire according to any one of claims 1 to 6.

**Patentansprüche**

1. Ein Verfahren zur Herstellung eines Flussmittelkerndrahts, in welchem eine Innenseite eines Stahlmantels mit einem Flussmittel gefüllt ist, wobei das Verfahren umfasst:

   Füllen einer Innenseite eines Stahlblechs mit dem Flussmittel während das Stahlblech zu einer runden Form geformt wird;
   Verbinden beider Enden des Stahlblechs um ein Stahlrohr zu bilden; und
   Walzen und Glühen des Stahlrohres um den Flussmittelkerndraht zu erhalten,
   wobei eine chemische Zusammensetzung des Flussmittelkerndrahts beinhaltet, in Massen-%, bezogen auf eine Gesamtmasse des Flussmittelkerndrahts,

   C: 0,03% bis 0,10%,
   Si: 0,40% bis 0,85%,
   Mn: 1,5% bis 3,5%,
   P: 0,020% oder weniger,
   S: 0,020% oder weniger,
   Cu: 0,03% bis 0,70%,
   Sn: 0,05% bis 0,30%,
   Mg: 0,05% bis 0,50%,
   Al: 0,05% bis 0,50%,
   ein Ti-Oxid: 1,50% bis weniger als 4,60%, bezogen auf ein $TiO_2$-Äquivalent,
   ein Si-Oxid: 0,30% bis 1,00%, bezogen auf ein $SiO_2$-Äquivalent,
   ein Zr-Oxid: 0,10% bis 0,50%, bezogen auf ein $ZrO_2$-Äquivalent,
   ein Fe-Oxid: 0,10% bis 1,00%, bezogen auf ein FeO-Äquivalent,
   ein Al-Oxid: 0,05% bis 0,50%, bezogen auf ein $Al_2O_3$-Äquivalent,
   eine Gesamtmenge einer Na-Verbindung und einer K-Verbindung: 0,050% bis 0,200%, bezogen auf eine Summe eines $Na_2O$-Äquivalents und eines $K_2O$-Äquivalents,
   eine Fluorverbindung: 0,02% bis 0,20%, bezogen auf ein F-Äquivalent, eine Gesamtmenge von Bi und einem Bi-Oxid: 0% bis 0,035%, bezogen auf das Bi-Äquivalent,
   Ni: 0% bis 2,50%,
   Ti: 0% bis 0,30%,
   B: 0% bis 0,010%,
   Mo: 0% bis 0,400%,
   W: 0% bis 0,200%,
   Cr: 0% bis 0,500%,
   Nb: 0% bis 0,300%,
   V: 0% bis 0,300%,
   N: 0% bis 0,0080%,
   Ca: 0% bis 0,0050%,
   REM: 0% bis 0,0050%,
   Sb: 0% bis 0,0050% und
   einen Rest: Fe und Verunreinigungen und

   einen Sn-Gehalt, einen Sb-Gehalt, einen W-Gehalt und einen Mo-Gehalt, welche den Ausdruck 1 erfüllen:

Sn+Sb>Mo+W: Ausdruck 1

wobei jedes Elementensymbol in Ausdruck 1 eine Menge eines Elements darstellt, welch mit dem Elementsymbol in Massen-%, bezogen auf die Gesamtmasse des Flussmittelkerndrahts, in Beziehung steht.

2. Das Verfahren zur Herstellung eines Flussmittelkerndrahts gemäß Anspruch 1,

wobei die chemische Zusammensetzung des Flussmittelkerndrahts beinhaltet, in Massen-%, bezogen auf die Gesamtmasse des Flussmittelkerndrahts ,
Mo: 0% bis 0,040% und
W: 0% bis 0,010%.

3. Das Verfahren zur Herstellung eines Flussmittelkerndrahts gemäß Anspruch 1 oder 2, wobei die chemische Zusammensetzung des Flussmittelkerndrahts beinhaltet, in Massen-%, bezogen auf die Gesamtmasse des Flussmittelkerndrahts,
Cu: 0,05% bis 0,70%.

4. Das Verfahren zur Herstellung eines Flussmittelkerndrahts gemäß einem der Ansprüche 1 bis 3,

wobei die chemische Zusammensetzung des Flussmittelkerndrahts eines oder mehrere der folgenden erfüllt, in Massen-%, bezogen auf die Gesamtmasse des Flussmittelkerndrahts,
Ni: 0,10% bis 2,50%,
Ti: 0,03% bis 0,30% und
B: 0,002% bis 0,010%.

5. Das Verfahren zur Herstellung eines Flussmittelkerndrahts gemäß einem der Ansprüche 1 bis 4,
wobei das Verbinden durch Verstemmen erfolgt.

6. Das Verfahren zur Herstellung eines Flussmittelkerndrahts gemäß einem der Ansprüche 1 bis 4,
wobei das Verbinden durch Schweißen erfolgt.

7. Ein Flussmittelkerndraht, hergestellt durch das Verfahren zur Herstellung eines Flussmittelkerndrahts gemäß einem der Ansprüche 1 bis 6.

8. Ein Verfahren zur Herstellung einer Schweißverbindung, umfassend:
Schweißen unter Verwendung eines Flussmittelkerndrahts, hergestellt durch das Verfahren zur Herstellung eines Flussmittelkerndrahts gemäß einem der Ansprüche 1 bis 6.

**Revendications**

1. Méthode de fabrication d'un fil fourré dans lequel l'intérieur d'une gaine en acier est rempli d'un fondant, la méthode comprenant :

le remplissage de l'intérieur d'une tôle en acier avec le fondant tout en donnant à la tôle en acier une forme arrondie ;
la jonction des deux extrémités de la tôle en acier pour former un tuyau en acier ; et
le laminage et le recuit du tuyau en acier pour obtenir le fil fourré,
dans laquelle une composition chimique du fil fourré contient, en % en masse par rapport à la masse totale du fil fourré,
C : 0,03 % à 0,10 %,
Si : 0,40 % à 0,85 %,
Mn : 1,5 % à 3,5 %,
P : 0,020 % ou moins,
S : 0,020 % ou moins,
Cu : 0,03 % à 0,70 %,
Sn : 0,05 % à 0,30 %,

Mg : 0,05 % à 0,50 %,

Al : 0,05 % à 0,50 %,

un oxyde de Ti : 1,50 % à moins de 4,60 % en termes d'équivalent de $TiO_2$,

un oxyde de Si : 0,30 % à 1,00 % en termes d'équivalent de $SiO_2$,

un oxyde de Zr : 0,10 % à 0,50 % en termes d'équivalent de $ZrO_2$,

un oxyde de Fe : 0,10 % à 1,00 % en termes d'équivalent de FeO,

un oxyde d'Al : 0,05 % à 0,50 % en termes d'équivalent d$Al_2O_3$,

un total de composé de Na et de composé de K : 0,050 % à 0,200 % en termes de la somme d'équivalent de $Na_2O$ et d'équivalent de $K_2O$,

un composé du fluor : 0,02 % à 0,20 % en termes d'équivalent de F,

un total de Bi et d'oxyde de Bi : 0 % à 0,035 % en termes d'équivalent de Bi,

Ni : 0 % à 2,50 %,

Ti : 0 % à 0,30 %,

B : 0 % à 0,010 %,

Mo : 0 % à 0,400 %,

W : 0 % à 0,200 %,

Cr : 0 % à 0,500 %,

Nb : 0 % à 0,300 %,

V : 0 % à 0,300 %,

N : 0 % à 0,0080 %,

Ca : 0 % à 0,0050 %,

REM : 0 % à 0,0050 %,

Sb : 0 % à 0,0050 %, et

un reste : Fe et impuretés, et

une teneur en Sn, une teneur en Sb, une teneur en W et une teneur en Mo satisfont à l'Expression 1 :

$$Sn + Sb > Mo + W : Expression\ 1$$

chaque symbole d'élément dans l'Expression 1 représente une quantité d'un élément en relation avec le symbole de l'élément en % en masse par rapport à la masse totale du fil fourré.

2. Méthode de fabrication d'un fil fourré selon la revendication 1,

dans laquelle la composition chimique du fil fourré contient, en % en masse par rapport à la masse totale du fil fourré,
Mo : 0 % à 0,040 %, et
W: 0 % à 0,010 %.

3. Méthode de fabrication d'un fil fourré selon la revendication 1 ou 2,

dans laquelle la composition chimique du fil fourré contient, en % en masse par rapport à la masse totale du fil fourré,
Cu : 0,05 % à 0,70 %.

4. Méthode de fabrication d'un fil fourré selon l'une quelconque des revendications 1 à 3,

dans laquelle la composition chimique du fil fourré satisfait à une ou plusieurs des conditions suivantes, en % en masse par rapport à la masse totale du fil fourré,
Ni : 0,10 % à 2,50 %,
Ti : 0,03 % à 0,30 %, et
B : 0,002 % à 0,010 %.

5. Méthode de fabrication d'un fil fourré selon l'une quelconque des revendications 1 à 4,
dans laquelle la jonction est un calfatage.

6. Méthode de fabrication d'un fil fourré selon l'une quelconque des revendications 1 à 4,
dans laquelle la jonction est un soudage.

7.  Fil fourré fabriqué par la méthode de fabrication d'un fil fourré selon l'une quelconque des revendications 1 à 6.

8.  Méthode de fabrication d'un joint soudé comprenant :
    un soudage utilisant un fil fourré fabriqué par la méthode de fabrication d'un fil fourré selon l'une quelconque des revendications 1 à 6.

FIG. 1

FIG. 2

## FIG. 3

```
┌──────────────────────────────────┐
│         WET STAGE                │
└──────────────────────────────────┘
              │
              │  50°C, 100%RH, 6 HOURS
              ▼
┌──────────────────────────────────┐
│   SALT APPLICATION STAGE         │
└──────────────────────────────────┘
              │
              │  ROOM TEMPERATURE, 15 MINUTES
              │  SALINE SOLUTION:
              │  0.5%NaCl、0.1%CaCl₂、0.075%NaHCO₃、pH8
              ▼
┌──────────────────────────────────┐
│         DRY STAGE                │
└──────────────────────────────────┘
              │
              │  60°C, 50%RH, 17.75 HOURS
```

ROOM TEMPERATURE, 15 MINUTES
SALINE SOLUTION:
$0.5\%NaCl$、$0.1\%CaCl_2$、$0.075\%NaHCO_3$、pH8

## FIG. 4

FIG. 5

FIG. 6

**EP 3 753 670 B1**

**REFERENCES CITED IN THE DESCRIPTION**

**Patent documents cited in the description**

- JP 2008163374 A
- JP 2007262555 A
- JP 2003311471 A
- JP 2000102893 A
- JP 2000288781 A
- JP 2004230456 A
- JP 2017042787 A
- JP 2013226578 A
- JP 2018043288 A